# EUROPEAN PATENT APPLICATION

(11) **EP 4 376 510 A1**
(43) Date of publication of application: **29.05.2024**
(21) Application number: 22845206.6
(22) Date of filing: 13.07.2022
(51) Int. Cl.: H04W 64/00

(54) **POSITIONING METHOD AND APPARATUS, AND COMMUNICATION DEVICE**

(30) Priority: 19.07.2021 CN 202110813747
(71) Applicant: Vivo Mobile Communication Co., Ltd., Dongguan, Guangdong 523863 (CN)
(72) Inventor: SI, Ye, Dongguan, Guangdong 523863 (CN); PAN, Xiang, Dongguan, Guangdong 523863 (CN); WANG, Yuanyuan, Dongguan, Guangdong 523863 (CN); ZHUANG, Zixun, Dongguan, Guangdong 523863 (CN)
(74) Representative: Lavoix
(86) International application number: PCT/CN2022/105459
(87) International publication number: WO 2023/001041

(57) **Abstract**

This application discloses a positioning method and apparatus, and a communication device. The positioning method in embodiments of this application includes: receiving, by a terminal, preconfigured positioning assistance data; and performing, by the terminal, positioning measurement and/or position estimation based on the preconfigured positioning assistance data.

## Description

### CROSS-REFERENCE TO RELATED APPLICATIONS

This application claims priority to Chinese Patent Application No. 202110813747.9, filed in China on July 19, 2021, which is incorporated herein by reference in its entirety.

### TECHNICAL FIELD

The present invention relates to the field of communication technologies, and in particular, to a positioning method and apparatus, and a communication device.

### BACKGROUND

Positioning assistance data contains configuration information for positioning measurement and/or position calculation for user equipment (User Equipment, UE), and is provided to the UE by a location server. In the related art, when it is determined that UE needs to perform positioning measurement, a positioning assistance data interaction procedure is initiated between the UE and a network-side device. However, the positioning assistance data interaction procedure requires a specific time, which does not help reduce a positioning delay.

### SUMMARY

Embodiments of this application provide a positioning method and apparatus, and a communication device, so as to resolve the problem of how to reduce a positioning delay.

According to a first aspect, a positioning method is provided, including:
receiving, by a terminal, preconfigured positioning assistance data; and
performing, by the terminal, positioning measurement and/or position estimation based on the preconfigured positioning assistance data.

According to a second aspect, a positioning method is provided, including:
sending, by a first network-side device, preconfigured positioning assistance data, where the preconfigured positioning assistance data is used for positioning measurement and/or position estimation.

According to a third aspect, a positioning method is provided, including:
sending, by a second network-side device, an activation message, where the activation message is used to activate preconfigured positioning assistance data, and the preconfigured positioning assistance data is used for positioning measurement and/or position estimation.

According to a fourth aspect, a positioning apparatus is provided, including:
a first transmission module, configured to receive preconfigured positioning assistance data; and
a first measurement module, configured to perform positioning measurement and/or position estimation based on the preconfigured positioning assistance data.

According to a fifth aspect, a positioning apparatus is provided, including:
a second transmission module, configured to send preconfigured positioning assistance data, where the preconfigured positioning assistance data is used for positioning measurement and/or position estimation.

According to a sixth aspect, a positioning apparatus is provided, including:
a third transmission module, configured to send an activation message, where the activation message is used to activate preconfigured positioning assistance data, and the preconfigured positioning assistance data is used for positioning measurement and/or position estimation.

According to a seventh aspect, a terminal is provided, where the terminal includes a processor, a memory, and a program or instructions stored in the memory and capable of running on the processor, and when the program or instructions are executed by the processor, the steps of the method according to the first aspect are implemented.

According to an eighth aspect, a terminal is provided, including a processor and a communication interface, where the communication interface is configured to receive preconfigured positioning assistance data; and the processor is configured to perform positioning measurement and/or position estimation based on the preconfigured positioning assistance data.

According to a ninth aspect, a network-side device is provided, where the network-side device includes a processor, a memory, and a program or instructions stored in the memory and capable of running on the processor, and when the program or instructions are executed by the processor, the steps of the method according to the second aspect or the third aspect are implemented.

According to a tenth aspect, a network-side device is provided, including a processor and a communication interface, where the communication interface is configured to send preconfigured positioning assistance data, and the preconfigured positioning assistance data is used for positioning measurement and/or position estimation; or the communication interface is configured to send an activation message, where the activation message is used to activate preconfigured positioning assistance data, and the preconfigured positioning assistance data is used for positioning measurement and/or position estimation.

According to an eleventh aspect, a readable storage medium is provided, where a program or instructions are stored in the readable storage medium; and when the program or instructions are executed by a processor, the steps of the method according to the first aspect are implemented, or the steps of the method according to the second aspect are implemented, or the steps of the method according to the third aspect are implemented.

According to a twelfth aspect, a chip is provided, where the chip includes a processor and a communication interface, the communication interface is coupled to the processor, and the processor is configured to run a program or instructions to implement the method according to the first aspect, or implement the method according to the second aspect, or implement the method according to the third aspect.

According to a thirteenth aspect, a computer program/program product is provided, where the computer program/program product is stored in a storage medium, and the program/program product is executed by at least one processor to implement the steps of the method according to the first aspect, the second aspect, or the third aspect.

In the embodiments of this application, the terminal receives the preconfigured positioning assistance data, and when it is determined that the UE needs to perform positioning measurement and/or position estimation, positioning measurement and/or position estimation can be directly performed based on the preconfigured positioning assistance data, with no need to interact with a network-side device for positioning assistance data, thereby reducing a corresponding delay.

### BRIEF DESCRIPTION OF DRAWINGS

FIG. 1 is a structural diagram of a communication system to which the embodiments of this application are applicable;
FIG. 2 is a first schematic flowchart of a positioning method according to an embodiment of this application;
FIG. 3 is a second schematic flowchart of a positioning method according to an embodiment of this application;
FIG. 4 is a third schematic flowchart of a positioning method according to an embodiment of this application;
FIG. 5 is a first schematic diagram of modules of a positioning apparatus according to an embodiment of this application;
FIG. 6 is a structural block diagram of a communication device according to an embodiment of this application;
FIG. 7 is a structural block diagram of a terminal according to an embodiment of this application;
FIG. 8 is a second schematic diagram of modules of a positioning apparatus according to an embodiment of this application;
FIG. 9 is a third schematic diagram of modules of a positioning apparatus according to an embodiment of this application;
FIG. 10 is a structural block diagram of a first network-side device according to an embodiment of this application; and
FIG. 11 is a structural block diagram of a second network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

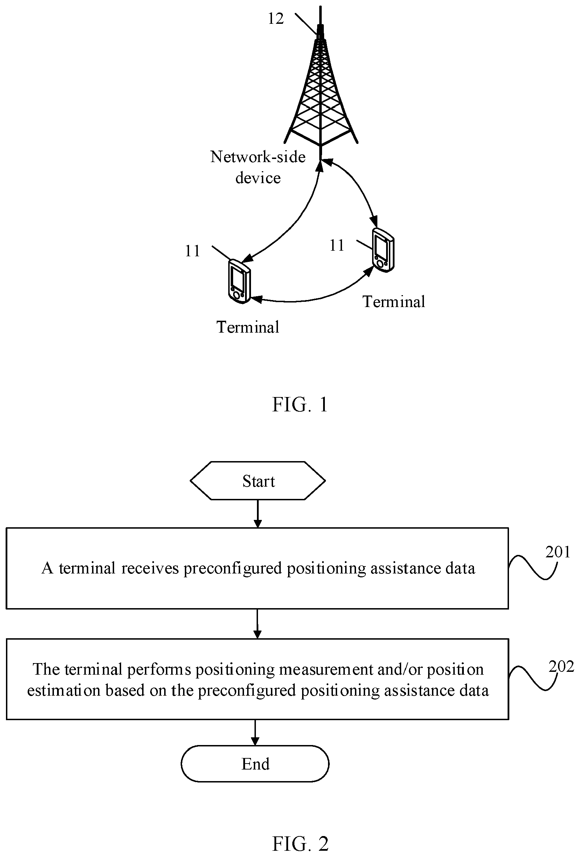

FIG. 1 is a block diagram of a wireless communication system to which the embodiments of this application are applicable. The wireless communication system includes a terminal 11 and a network-side device 12. The terminal 11 may also be referred to as a terminal device or user terminal (User Equipment, UE), and the terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), and a smart home device (a home device with wireless communication function, such as refrigerator, TV, washing machine, or furniture). The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the terminal 11 is not limited in the embodiments of this application. The network-side device 12 may be a base station or a core network-side device. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Networks, WLAN) access point, a wireless fidelity (Wireless Fidelity, WiFi) node, a transmission and reception Point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following describes in detail a positioning method provided in the embodiments of this application by using some embodiments and application scenarios thereof with reference to the accompanying drawings.

As shown in FIG. 2, an embodiment of this application provides a positioning method including the following steps.

Step 201: A terminal receives preconfigured positioning assistance data.

The preconfigured positioning assistance data is used for indicating configuration information that assists the terminal in positioning measurement and/or position estimation, and the preconfigured positioning assistance data at least includes preconfigured positioning reference signal configuration information and positioning node configuration information.

The preconfigured positioning assistance data includes but is not limited to assistance data for a positioning method such as downlink time difference of arrival (Downlink Time Difference Of Arrival, DL-TDOA), downlink angle of departure (Downlink Angle of Departure, DL-AOD), enhanced cell ID (Enhance Cell Identity, ECID), multi-cell round-trip time (Multi cell Round-Trip Time, Multi-RTT), assisted global navigation satellite system (Assisted Global Navigation Satellite System, A-GNSS), wireless local area network (WLAN), or Bluetooth.

The positioning node configuration information includes but is not limited to assistance data such as TRP position, TRP synchronization information, beam information of TRP, GNSS data, and WLAN access point (WLAN Access Point, WLAN AP) data.

In this step, the terminal receives preconfigured positioning assistance data sent by a first network-side device (such as a location server), so as to perform positioning measurement and/or position estimation based on the preconfigured positioning assistance data subsequently.

The positioning measurement includes but is not limited to measurement on a positioning reference signal (Positioning Reference Signal, PRS), a synchronization signal/physical broadcast channel signal block (Synchronization Signal and PBCH block, SSB), and a CSI reference signal (CSI Reference Signal, CSI-RS).

Optionally, if an initial state of the preconfigured positioning assistance data is an activated state, the UE assumes that the preconfigured positioning assistance data takes effect immediately, that is, takes effect immediately after the UE obtains through decoding signaling (such as RRC or LPP) corresponding to the preconfigured positioning assistance data. If the initial state of the preconfigured positioning assistance data is a deactivated state, the UE assumes that the preconfigured positioning assistance data does not take effect immediately, and the UE may determine that the preconfigured positioning assistance data takes effect in a case that an activation message is received or preset event information is satisfied.

Step 202: The terminal performs positioning measurement and/or position estimation based on the preconfigured positioning assistance data.

When it is determined that the UE needs to perform positioning measurement and/or position estimation, positioning measurement and/or position estimation can be directly performed based on the preconfigured positioning assistance data, with no need to interact with a network-side device for positioning assistance data, thereby reducing a corresponding delay.

In this embodiment of this application, the terminal receives the preconfigured positioning assistance data, and when it is determined that the UE needs to perform positioning measurement and/or position estimation, positioning measurement and/or position estimation can be directly performed based on the preconfigured positioning assistance data, with no need to interact with a network-side device for positioning assistance data, thereby reducing a corresponding delay.

Optionally, the preconfigured positioning assistance data includes at least one group of preconfigured positioning assistance data, and each group of preconfigured positioning assistance data includes at least one of the following:
an identifier of the preconfigured positioning assistance data, where the identifier of the preconfigured positioning assistance data is used for indicating a type of positioning assistance data, and the identifier of the preconfigured positioning assistance data is used for distinguishing whether positioning assistance data is preconfigured positioning assistance data or ordinary positioning assistance data, where the ordinary positioning assistance data is positioning assistance data that takes effect immediately after configuration and that does not have an activated state or a deactivated state, or is positioning assistance data described in the 3rd generation partnership project release 16 (3rd Generation Partnership Project Release-16, 3GPP Rel-16) and previous releases. The identifier of the preconfigured positioning assistance data may be represented by 1 bit. Optionally, the identifier may be used when a positioning mode is UE-assisted (UE-assisted); or the UE may be configured with preconfigured positioning assistance data when the positioning mode is UE-assisted; or the UE does not expect to be configured with preconfigured positioning assistance data when the positioning mode is UE-based (UE-based);
a configuration identifier for the preconfigured positioning assistance data; where the configuration identifier for the preconfigured positioning assistance data is used to represent a corresponding identifier of the group of preconfigured positioning assistance data, and optionally, the configuration identifier for the preconfigured positioning assistance data herein may alternatively be represented as a group identifier of preconfigured positioning assistance data or the like;
a state of the preconfigured positioning assistance data; where the state of the preconfigured positioning assistance data includes activated or deactivated. Optionally, the initial state of the preconfigured positioning assistance data is deactivated by default (as specified in a protocol), and in this case, there is no need to specifically indicate activated or deactivated. For example, when the preconfigured positioning assistance data is used for positioning measurement and/or position estimation, the initial state of the preconfigured positioning assistance data is deactivated by default. Optionally, the state of the preconfigured positioning assistance data here can be understood as the initial state of the preconfigured positioning assistance data. The activated state can be understood as that the UE can perform positioning measurement and/or position estimation based on the preconfigured positioning assistance data, and the deactivated state can be understood as that the UE is not required or expected to perform positioning measurement and/or position estimation based on the preconfigured positioning assistance data. Alternatively, the activated state can be understood as that a positioning reference signal corresponding to positioning reference signal configuration in the preconfigured positioning assistance data has been activated, and the deactivated state can be understood as that the positioning reference signal corresponding to the positioning reference signal configuration in the preconfigured positioning assistance data is deactivated. In addition, if the state of the preconfigured positioning assistance data is deactivated, the UE assumes that the preconfigured positioning assistance data has not taken effect, and further determines based on a subsequent activation message or event information whether the preconfigured positioning assistance data takes effect; or if the state of the preconfigured positioning assistance data is activated, the UE needs to assume that the preconfigured positioning assistance data takes effect immediately. Optionally, the UE determines based on subsequent deactivation signaling or event information whether the preconfigured positioning assistance data becomes invalid;
information indicating an activation mode for the preconfigured positioning assistance data; where the activation mode includes explicit activation or implicit activation; optionally, the activation mode may be specified by the protocol, for example, a default activation mode is explicit activation or implicit activation;
information indicating a deactivation mode for the preconfigured positioning assistance data; where the deactivation mode includes explicit deactivation or implicit deactivation; optionally, the deactivation mode may be specified by the protocol, for example, a default deactivation mode is explicit deactivation or implicit deactivation;
content of the preconfigured positioning assistance data; where the content of the preconfigured positioning assistance data may be ordinary positioning assistance data in existing protocols, for example, information used for positioning measurement and/or position estimation, such as PRS configuration information or information about a cell or TRP participating in positioning;
a valid time of the preconfigured positioning assistance data; where for example, a valid time length (or valid timer, valid timer) of the preconfigured positioning assistance data is T1; after the UE receives the configuration, the preconfigured positioning assistance data is valid within a time T1, and the preconfigured positioning assistance data becomes no longer valid after the time T1. For example, the state of the preconfigured positioning assistance data is deactivated and the valid time of the preconfigured positioning assistance data is T1. If the preconfigured positioning assistance data fails to be activated within the time T1, the UE assumes that the preconfigured positioning assistance data becomes invalid after the time T1 elapses. For another example, the preconfigured positioning assistance data remains valid within the time T1 after being activated, and becomes no longer valid after the time T1 elapses. Optionally, T1 may alternatively be used to change the state of the preconfigured positioning assistance data from an activated state to a deactivated state. For example, when the state of the preconfigured positioning assistance data changes from the activated state to the deactivated state, the timer is started. If the preconfigured positioning assistance data has not been activated within the time T1, the UE assumes that the preconfigured positioning assistance data configuration becomes invalid after the time T1 elapses. Optionally, after the UE receives the preconfigured positioning assistance data and after T1 time elapses, the preconfigured positioning assistance data all becomes invalid regardless of whether the preconfigured positioning assistance data is activated or deactivated. Optionally, the valid time of the preconfigured positioning assistance data may alternatively be specified by the protocol, or indicated by the UE or the location server (for example, being indicated in request information for the preconfigured positioning assistance data). After the preconfigured positioning assistance data becomes invalid, the UE can report information about configuration invalidation to a serving base station (gNB) or the location server, for example, reporting an identifier of invalid preconfigured positioning assistance data, an invalidation cause (for example, expiration of a valid time, or exceeding a valid area), and so on. After the preconfigured positioning assistance data becomes invalid, the UE can perform positioning measurement and/or position estimation (fallback behavior) based on the ordinary positioning assistance data, or stop using the preconfigured positioning assistance data for positioning measurement and/or position estimation, or use specific positioning assistance data for measurement, or request to newly configure the preconfigured positioning assistance data. Certainly, a specific fallback behavior that the UE uses can be specified by the protocol, indicated by the network, and autonomously selected by the UE;
a valid area associated with the preconfigured positioning assistance data, indicating a valid area for the preconfigured positioning assistance data; where beyond the valid area, the preconfigured positioning assistance data becomes invalid;
a bandwidth part (Bandwidth Part, BWP) identifier associated with the preconfigured positioning assistance data; where a BWP associated with the preconfigured positioning assistance data may be represented by a BWP identifier and/or serving cell identifier, that is, different BWPs correspond to different preconfigured positioning assistance data. Optionally, when the UE performs BWP switching, corresponding preconfigured positioning assistance data can be switched;
a component carrier (Component Carrier, CC) identifier associated with the preconfigured positioning assistance data; where a CC associated with the preconfigured positioning assistance data can be represented by a BWP identifier and/or a serving cell identifier, that is, different CCs correspond to different preconfigured positioning assistance data. Optionally, when the UE activates or deactivates a CC, corresponding preconfigured positioning assistance data can be switched. Optionally, in a case of "the BWP identifier associated with the preconfigured positioning assistance data", the CC identifier and the BWP identifier can be used together, that is, the BWP is a BWP in a CC;
a frequency point associated with the preconfigured positioning assistance data; where different preconfigured positioning assistance data corresponds to different frequency points, for example, a working frequency point A of the UE corresponds to first preconfigured positioning assistance data, a working frequency point B of the UE corresponds to second preconfigured positioning assistance data, and the first preconfigured positioning assistance data and the second preconfigured positioning assistance data are different positioning assistance data; and
a first long term evolution positioning protocol (LTE positioning protocol, LPP) transaction identifier (LPP transaction ID), where the first LPP transaction identifier is a transaction identifier of a first LPP message carrying the preconfigured positioning assistance data.

Optionally, the preconfigured positioning assistance data may alternatively be related to a TRP, that is, different TRPs correspond to different preconfigured positioning assistance data. Optionally, the preconfigured positioning assistance data may alternatively be related to PRS beams (that is, PRS resources). To be specific, with switching of a PRS beam, different preconfigured positioning assistance data can be correspondingly switched.

It should be noted that a group of preconfigured positioning assistance data in this embodiment of this application may indicate complete positioning assistance data, part of positioning assistance data, or specific positioning assistance data. For example, some static positioning assistance data such as a TRP position, a TRP identifier, or a TRP beam direction is not directly related to measurement of positioning reference signals, and may not be included in the preconfigured positioning assistance data, not requiring to be activated or deactivated. Some dynamic positioning assistance data such as PRS-related configuration is directly related to measurement of positioning reference signals, and needs to be included in the preconfigured positioning assistance data, possibly requiring to be activated or deactivated.

Optionally, the valid area includes at least one of the following:
an area corresponding to a cell list, where the cell list includes at least one cell, which can be represented by a cell ID such as a physical cell identifier (Physical Cell Identification, PCI) or an NR cell global identifier (NR Cell Global Identifier, NCGI); optionally, the cell list includes a current serving cell or camp-on cell of the UE;
a specific area, such as a specific area in a cell, or an area according to area division specified by the protocol, or an area associated with an SSB index (index) (that is, different SSB indexes may correspond to different preconfigured assistance data);
an area in which a measurement change value of a specific reference signal does not exceed a threshold (compared with a measurement result obtained when the preconfigured positioning assistance data is received), where for example, a reference signal received power (Reference Signal Received Power, RSRP) change of synchronization signal and PBCH block (Synchronization Signal and PBCH block, SSB) does not exceed a threshold (compared with an RSRP of SSB obtained when the preconfigured positioning assistance data is received), and the UE assumes that the preconfigured positioning assistance data configuration is valid; otherwise, it becomes invalid;
an area in which a distance from a target position does not exceed a preset distance; such as an area in which the terminal moves from a current position or area (the position or area when the preconfigured positioning assistance data is received) does not exceed an area with a linear distance; and
an area of the current serving cell (or camp-on cell) of the UE.

Optionally, the valid area of the preconfigured positioning assistance data may alternatively be specified by the protocol, or indicated by the UE or the location server (for example, being indicated in the request information for the preconfigured positioning assistance data). The valid area of the preconfigured positioning assistance data can alternatively be understood as that the preconfigured positioning assistance data is associated with an area and that different areas correspond to different preconfigured positioning assistance data.

In this embodiment of this application, if the (initial) state of the preconfigured positioning assistance data is deactivated, the preconfigured positioning assistance data includes an indication of an activation mode for activating the preconfigured positioning assistance data from the base station, which is explicit activation or implicit activation. If the (initial) state of the preconfigured positioning assistance data is activated, the preconfigured positioning assistance data includes an indication of an activation mode for deactivating the preconfigured positioning assistance data from the base station, which is explicit deactivation or implicit deactivation. It should be noted that the activation mode or deactivation mode may be a same mode, for example, both being an implicit activation mode or explicit activation mode. The explicit activation mode means activation using explicit signaling, for example, activation using an activation message, where the activation message may be sent by using the following signaling, including but not limited to at least one of radio resource control (Radio Resource Control, RRC) signaling, medium access control (Medium Access Control, MAC) control element signaling, downlink control information (Downlink Control Information, DCI), and LTE positioning protocol (LTE positioning protocol, LPP).

The implicit activation mode means activation not using explicit signaling, where activation of the preconfigured positioning assistance data may be automatically triggered based on occurrence of some events (such as reception of a positioning measurement request and/or a position estimation request), on which the terminal and the first network-side device (such as the location server) have consistent understanding.

It should be noted that in this embodiment of this application, descriptions about activation are also applicable to deactivation. For example, if the configured positioning assistance data request or configured positioning assistance data information includes an activation mode, a deactivation mode (for example, the activation mode is the same as the deactivation mode) is naturally also included. For another example, an activation request for positioning assistance data is configured and a corresponding deactivation request is also present.

Optionally, a transaction end flag in the first LPP message indicates transaction being not ended. The transaction end flag is specifically "Transaction End Flag" or "endTransaction".

Specifically, in a case that the activation mode for the preconfigured positioning assistance data is explicit activation, the transaction end flag in the first LPP message indicates not ending, or in a case that the activation mode of the preconfigured positioning assistance data is implicit activation, the transaction end flag in the first LPP message indicates ending.

Optionally, before the terminal receives the preconfigured positioning assistance data, the method further includes:
sending, by the terminal, request information for the preconfigured positioning assistance data, where the request information is used for requesting the preconfigured positioning assistance data; and

The request information includes at least one of the following:
a type of positioning assistance data, where the type of positioning assistance data includes: ordinary positioning assistance data or preconfigured positioning assistance data. Optionally, the type of positioning assistance data is indicated by one flag (flag), for example, the flag being 1 indicates that the type of positioning assistance data is preconfigured positioning assistance data, and the flag being 0 indicates that the type of positioning assistance data is ordinary preconfigured positioning assistance data. Optionally, the type of positioning assistance data can be represented by the "preconfigured positioning assistance data identifier" described above;
a valid time indication for the preconfigured positioning assistance data, where, optionally, the valid time at least includes at least one of an initial valid time, a validation end time, and a validation duration of the preconfigured positioning assistance data. Optionally, the valid time can alternatively be expressed as a time when the UE expects to perform PRS measurement (or the UE expects to obtain its own location within a time/time window), such as "schedule location time";
a valid-area indication for the preconfigured positioning assistance data;
an area in which the terminal is currently located, for example, a physical cell identifier (Physical Cell Identifier, PCI) of a current primary cell of the terminal;
a subsequent activation request indication for positioning assistance data, indicating that the first network-side device may subsequently receive an activation request for positioning assistance data, and activate the positioning assistance data according to the activation request;
a subsequent deactivation request indication for positioning assistance data, indicating that the first network-side device may subsequently receive a deactivation request for positioning assistance data, and deactivate the positioning assistance data according to the deactivation request;
a terminal-expected activation time indication for the preconfigured positioning assistance data, at least including at least one of an initial activation time, an activation end time, an activation duration, an activation time period, the number of activation periods, and an interval of activation periods (an interval between adjacent periods) of the preconfigured positioning assistance data;
a terminal-expected time for positioning measurement and/or position estimation, that is, a time when the UE expects to perform positioning measurement and/or position estimation (or the UE expects to obtain its own location within a time/time window), such as "schedule location time"; and
expected configuration information for positioning assistance data, where the configuration information corresponds to the content of the preconfigured positioning assistance data.

Optionally, the type of positioning assistance data includes preconfigured positioning assistance data or ordinary positioning assistance data.

Optionally, in a case that the type of positioning assistance data in the request information is preconfigured positioning assistance data, the request information further includes at least one of the following:
a state of the preconfigured positioning assistance data; where the state of the preconfigured positioning assistance data includes an activated (activated) state or a deactivated (deactivated) state, and the first network-side device configures activated or deactivated preconfigured positioning assistance data for the UE based on the state of the preconfigured positioning assistance data. Optionally, in this embodiment of the application, the deactivated preconfigured positioning assistance data is requested by default, and in this case, the state of the preconfigured positioning assistance data does not need to be included in the request information for the preconfigured positioning assistance data. Optionally, the state of the preconfigured positioning assistance data in the request information for the preconfigured positioning assistance data can be understood as the initial state of the preconfigured positioning assistance data. Optionally, the state of the preconfigured positioning assistance data is indicated by one flag (flag); and
(if the state of the preconfigured positioning assistance data is deactivated) information indicating an activation mode for the preconfigured positioning assistance data, where the activation mode includes explicit activation or implicit activation. Here, when the preconfigured positioning assistance data is in the activated state, the first network-side device activates the preconfigured positioning assistance data in an explicit or implicit manner through the activation mode of the preconfigured positioning assistance data, or the first network-side device configures a corresponding activation mode to the UE using the activation mode of the preconfigured positioning assistance data. Optionally, in this embodiment of this application, the default activation mode requested for the preconfigured positioning assistance data is explicit activation or implicit activation. In this case, an indication of the activation mode for the preconfigured positioning assistance data does not need to be included in the request information for the preconfigured positioning assistance data. Optionally, the state of the preconfigured positioning assistance data in the request information for the preconfigured positioning assistance data can be understood as the initial state of the preconfigured positioning assistance data. Optionally, one flag (flag) is used to indicate the activation mode of the preconfigured positioning assistance data.

Optionally, the performing, by the terminal, positioning measurement and/or position estimation based on the preconfigured positioning assistance data includes:
in a case that a state of the preconfigured positioning assistance data is activated, performing, by the terminal, positioning measurement and/or position estimation based on the preconfigured positioning assistance data.

Optionally, before the performing, by the terminal, positioning measurement and/or position estimation based on the preconfigured positioning assistance data, the method further includes:
sending, by the terminal, a first activation request for the preconfigured positioning assistance data, where the first activation request is used to activate the preconfigured positioning assistance data.

Specifically, a message carrying the first activation request may be uplink control information (Uplink Control Information, UCI), MAC CE, RRC, or an LPP message.

Optionally, the first activation request includes at least one of the following:
an activation request identifier, where the identifier is used to request the second network-side device to activate the preconfigured positioning assistance data;
a type of an activation message, for example, being sent by MAC CE, DCI, RRC or LPP; where optionally, in a case of a default or protocol-specified type of activation message, the information can be omitted;
a terminal-expected time for positioning measurement and/or position estimation, that is, a time when the UE expects to perform positioning measurement and/or position estimation (or the UE expects to obtain its own location within a time/time window), such as schedule location time;
an activation time of the preconfigured positioning assistance data, where the activation time at least includes at least one of an initial activation time, an activation end time, an activation duration, an activation time period, the number of activation periods, and an interval of activation periods (an interval between adjacent periods) of the preconfigured positioning assistance data; and
an activation time requirement for the preconfigured positioning assistance data, that is, the second network-side device is required to activate the preconfigured positioning assistance data within a T2 time after receiving the activation request.

Optionally, before the performing, by the terminal, positioning measurement and/or position estimation based on the preconfigured positioning assistance data, the method further includes:
receiving an activation message; and
activating the preconfigured positioning assistance data according to the activation message.

The activation message includes at least one of the following:
an activation identifier, where the activation identifier is used to activate the preconfigured positioning assistance data, for example, the activation message is sent via DCI signaling, and a field in the DCI is "activate preconfigured positioning assistance data";
a first configuration identifier, where the first configuration identifier is used to indicate preconfigured positioning assistance data with a specific configuration or specific identifier, and there may be one or more first configuration identifiers; and
information related to first LPP transaction.

In this embodiment of this application, the activation message may be sent using at least one of LPP, MAC CE, DCI, RRC, and NRPPa. Optionally, the activation message may be sent directly from the first network-side device to the UE, for example, being sent using an LPP message. Optionally, the activation message may be sent from the first network-side device to the UE indirectly, specifically, being sent to the second network-side device (serving gNB) by the first network-side device (location server), for example, using NRPPa, and then directly sent to the UE by the second network-side device, for example, using RRC, MAC CE, or DCI signaling.

The foregoing manner of activating the preconfigured positioning assistance data using an activation message is explicit activation, and the UE assumes that the preconfigured positioning assistance data takes effect in the first PRS occasion/instance upon reception of the activation message (or in a period of time after the activation message, such as a processing time).

Optionally, the information related to first LPP transaction includes at least one of the following:
a second LPP transaction identifier, where the second LPP transaction identifier is the same as a first LPP transaction identifier, the first LPP transaction identifier is a transaction identifier of a first LPP message, and the first LPP message is an LPP message carrying the preconfigured positioning assistance data. The second LPP transaction identifier being the same as the first LPP transaction identifier indicates that the activation message and the preconfigured positioning assistance data belong to a same LPP transaction. Optionally, the second LPP transaction identifier being different from the first LPP transaction identifier indicates that the activation message and the preconfigured assistance data belong to different LPP transactions (that is, the pre-configuration of the positioning assistance data and the activation of the positioning assistance data belong to different transactions). Further, if the second LPP transaction identifier is different from the first LPP transaction identifier, the information related to first LPP transaction may further include the first LPP transaction identifier, indicating that the activation message is in an association with an LPP message (transaction) for specific preconfigured assistance data;
a second transaction sequence identifier (Transaction sequence ID), where the second transaction sequence identifier is different from a first transaction sequence identifier, and the first transaction sequence identifier is a transaction sequence identifier of the first LPP message; and
a first transaction end flag, where the first transaction end flag indicates whether the transaction is ended or not ended.

Optionally, it is considered by default that the activation message indicates the transaction being not ended and the deactivation message indicates the transaction being ended.

Optionally, end of the transaction is indicated by default, that is, the UE receives the activation message, the preconfigured positioning assistance data takes effect, and then the LPP transaction is ended.

Optionally, the preconfigured positioning assistance data and the activation message for the preconfigured positioning assistance data may belong to different segments (Segmentation) of a same LPP transaction. Then, the preconfigured assistance data and/or activation message further contains a segment indication, such as 'more messages on the way (MoreMessagesOnTheWay)' and 'no more messages (NoMoreMessages)'. For example, the preconfigured assistance data contains a segment indication 'MoreMessageOntheway', which indicates that there are still activation messages to be transmitted subsequently. The activation message contains a segment indication 'NoMoreMessages', which indicates that there are no more messages to be transmitted subsequently; or contains an indication 'MoreMessagesOnTheWay', indicating that there are still deactivation messages to be transmitted subsequently.

In addition, in this embodiment of this application, the method further includes:
receiving a deactivation message, where the deactivation message is a deactivation message used to deactivate the preconfigured positioning assistance data; and the deactivation message may include at least one of the following:
a deactivate identifier, used for deactivating the preconfigured positioning assistance data, for example, if the deactivation signaling is DCI, a field in the DCI is "preconfigured positioning assistance data deactivation";
a third configuration identifier, where the third configuration identifier is used to indicate preconfigured positioning assistance data with a specific configuration or specific identifier, and there may be one or more third configuration identifiers; and
information related to third LPP transaction.

Optionally, the information related to third LPP transaction includes at least one of the following:
a fourth LPP transaction identifier, where the fourth LPP transaction identifier is the same as the first LPP transaction identifier or the second LPP transaction identifier, indicating that the deactivation message belongs to a same LPP transaction as the preconfigured positioning assistance data or the activation message. Optionally, the fourth LPP transaction identifier is different from the first or second LPP transaction identifier, indicating that the deactivation message belongs to a different LPP transaction from the preconfigured assistance data or activation message. Further, if the fourth LPP transaction identifier is different from the first LPP transaction identifier or the second LPP transaction identifier, the information related to third LPP transaction may further include the first LPP transaction identifier or the second LPP transaction identifier, indicating that the deactivation message is in an association with an LPP message (transaction) of specific preconfigured assistance data or activation message;
a fourth transaction sequence identifier, where the fourth transaction sequence identifier is different from the first transaction sequence identifier or the second transaction sequence identifier. The first transaction sequence identifier is a transaction sequence identifier for the first LPP message, and the fourth transaction sequence identifier is different from the first transaction sequence identifier or the second transaction sequence identifier. The deactivation message is different from the preconfigured positioning assistance data and the activation message; and
a fourth transaction end flag.

Optionally, it is considered by default that the activation message indicates the transaction being not ended and the deactivation message indicates the transaction being ended.

Optionally, end of the transaction is indicated by default, that is, the UE receives the deactivation message, the preconfigured positioning assistance data no more takes effect, and then the LPP transaction is ended.

The deactivation message may be sent using at least one of LPP, MAC CE, DCI, RRC, and NRPPa.

Optionally, the deactivation message for the preconfigured positioning assistance data and the activation message for the preconfigured positioning assistance data or the preconfigured positioning assistance data may belong to different segments (Segmentation) of a same LPP transaction. For example, the activation message contains a segment indication 'MoreMessageOntheway', which indicates that there are still deactivation messages to be transmitted subsequently, and the deactivation message contains a segment indication 'NoMoreMessages', which indicates that there are no more messages to be transmitted subsequently. For another example, the preconfigured assistance data contains a segment indication 'MoreMessageOntheway', which indicates that there are still activation and deactivation messages to be transmitted subsequently. The activation message contains a segment indication 'MoreMessageOntheway', which indicates that there are still deactivation messages to be transmitted subsequently. The deactivation message contains a segment indication 'NoMoreMessages', which indicates that there are no more messages to be transmitted subsequently.

Optionally, after the terminal receives the preconfigured positioning assistance data, the method further includes:
receiving first indication information, where the first indication information is used for deactivating, releasing, or modifying the preconfigured positioning assistance data.

Specifically, after the activation message is received, the preconfigured positioning assistance data may be deactivated, released, or modified by using the first indication information. After the preconfigured positioning assistance data is received, the preconfigured positioning assistance data may be released or modified by using the first indication information.

Optionally, the first indication information includes at least one of the following:
a deactivate identifier, a release identifier, or a modify identifier;
a second configuration identifier, where the second configuration identifier is used to indicate preconfigured positioning assistance data with a specific configuration or specific identifier; and there may be one or more second configuration identifiers;
specific configuration information for preconfigured positioning assistance data, that is, preconfigured positioning assistance data of a specific configuration is deactivated, released, or modified by using the first indication information; and
information related to second LPP transaction.

Optionally, the information related to second LPP transaction includes at least one of the following:
a third LPP transaction identifier, where the third LPP transaction identifier is the same as the first LPP transaction identifier or the second LPP transaction identifier, the first LPP transaction identifier is a transaction identifier of a first LPP message, the first LPP message is an LPP message carrying the preconfigured positioning assistance data, and the second LPP transaction identifier is a transaction identifier in the activation message. The third LPP transaction identifier is the same as the first LPP transaction identifier or the second LPP transaction identifier, indicating that the first indication information belongs to a same LPP transaction as the preconfigured positioning assistance data or the activation message. Optionally, the third LPP transaction identifier is different from the first or second LPP transaction identifier, indicating that the message belongs to a different LPP transaction from the preconfigured assistance data or activation message. Further, if the third LPP transaction identifier is different from the first LPP transaction identifier or the second LPP transaction identifier, the information related to second LPP transaction may further include the first LPP transaction identifier or the second LPP transaction identifier, indicating that the message is in an association with an LPP message (transaction) of specific preconfigured assistance data or activation message;
a third transaction sequence identifier, where the third transaction sequence identifier is different from the first transaction sequence identifier or the second transaction sequence identifier. The first transaction sequence identifier is a transaction sequence identifier of the first LPP message and the second transaction sequence identifier is a transaction sequence identifier in the activation message. The third transaction sequence identifier being different from the first transaction sequence identifier or the second transaction sequence identifier indicates that the first indication information is different from the preconfigured positioning assistance data or the activation message; and
a second transaction end flag, indicating whether the transaction is ended or not ended.

Optionally, the default activation message indicates that the transaction is not ended, and the deactivation message indicates that the transaction is ended.

Optionally, end of the transaction is indicated by default, that is, the UE receives the deactivation message, the preconfigured positioning assistance data no more takes effect, and then the LPP transaction is ended.

The first indication information may be sent using at least one of LPP, MAC CE, DCI, RRC, and NRPPa.

Optionally, the deactivation message for the preconfigured positioning assistance data and a message of releasing or modifying a specific configuration may belong to different segments (Segmentation) of a same LPP transaction from the activation message for the preconfigured positioning assistance data or the preconfigured positioning assistance data. Then, the deactivation message and the message for releasing or modifying a specific configuration further contains a segment indication, such as 'more messages on the way (MoreMessagesOnTheWay)' and 'no more messages (NoMoreMessages)'.

Optionally, before the performing, by the terminal, positioning measurement and/or position estimation based on the preconfigured positioning assistance data, the method further includes:
determining, based on first event information, that the state of the preconfigured positioning assistance data is being activated.

The first event information includes at least one of the following:
a positioning measurement and/or position estimation request message having been received; where the positioning measurement and/or position estimation request message is information used by the location server to request the UE to perform positioning measurement or position estimation, and is carried by an LPP message, and an information element (Information Element, IE) in the LPP protocol is "RequestLocationInformation". Optionally, the preconfigured positioning assistance data takes effect in the first PRS occasion/instance after the UE receives the positioning measurement and/or position estimation request message (or in a period of time after the activation signaling, such as a processing time). Optionally, this condition is not applicable to a case that there is no positioning measurement and/or position estimation request message in the UE-based positioning mode, or is not applicable to the UE-based positioning mode;
no positioning measurement and/or position estimation end request being received;
the preconfigured positioning assistance data being within a valid time; and
the terminal being located in a valid area.

In an embodiment of this application, when the UE moves from area A to area B, preconfigured assistance data corresponding to area A changes from activated to deactivated, and the preconfigured assistance data for area B changes from deactivated to activated. In another embodiment, the network configures multiple groups of preconfigured positioning assistance data, such as group 1 corresponding to area A and group 2 corresponding to area B. The UE is currently in area A, and the preconfigured positioning assistance data needs to be activated immediately. At that time, an (initial) state of preconfigured assistance data for group 1 is "activated" and an initial state for group 2 is "deactivated". As the UE moves, for example, the UE moves from area A to area B, the state for group 1 becomes "deactivated" and the state for group 2 becomes "activated".

Optionally, the preconfigured positioning assistance data is activated only when all conditions of the first event information are met.

Further, it is determined, based on third event information, that the state of the preconfigured positioning assistance data is deactivated; where
the third event information includes at least one of the following:
no positioning measurement and/or position estimation end request being received by the UE;
a positioning measurement and/or position estimation end message having been received by the UE;
the preconfigured positioning assistance data being not within a valid time; and
the terminal being not located in a valid area.

Optionally, the state of the preconfigured positioning assistance data is deactivated only when any one of conditions of the third event information is met.

Optionally, the preconfigured positioning assistance data includes at least one of the following:
static positioning assistance data;
semi-static positioning assistance data; and
dynamic positioning assistance data.

In this embodiment of this application, the manner of activating or deactivating the preconfigured positioning assistance data based on the event information belongs to implicit activation or implicit deactivation, and the first event information and/or third event information can be specified by the protocol or indicated by the network side.

Optionally, a state of the static positioning assistance data is always an activated state. That is, the state of the static positioning assistance data is not affected by the activation or deactivation of the preconfigured positioning assistance data. The static positioning assistance data contains at least one of the following characteristics: being not directly related to measurement of positioning reference signal (PRS), not to be changed after configuration, existing objectively, being not activated and/or deactivated, being not modified, and the like.

In this embodiment of this application, the static positioning assistance data, semi-static positioning assistance data, and dynamic positioning assistance data may be indicated in the preconfigured positioning assistance data or specified by the protocol. For example, a position of TRP and TRP antenna and beam information are static positioning assistance data; and related configuration information of PRS is semi-static assistance data. Optionally, semi-static and dynamic positioning assistance data may be collectively referred to as non-static positioning assistance data, and may be activated and/or deactivated, or may be modified.

Further, assistance data may be further grouped, static positioning assistance data may be divided into one group, dynamic positioning assistance data may be divided into one group, and semi-static positioning assistance data may be divided into one group. Different groups have corresponding labels, such as static, semi-static or dynamic labels. For another example, tags may be added for different assistance data, such as static, semi-static or dynamic tags. For the static assistance data, the UE may assume that such assistance data is always an activated state (or always valid) and may not be activated or deactivated. The semi-static and/or dynamic assistance data needs to be activated or deactivated.

The present invention further includes the following terminal behavior: if the state of preconfigured positioning assistance data is deactivated, the UE is not expected to perform PRS measurement (UE is not expected to perform PRS measurement).

In this embodiment of this application, the terminal receives the preconfigured positioning assistance data, and when it is determined that the UE needs to perform positioning measurement and/or position estimation, positioning measurement and/or position estimation can be directly performed based on the preconfigured positioning assistance data, with no need to interact with a network-side device for positioning assistance data, thereby reducing a corresponding delay.

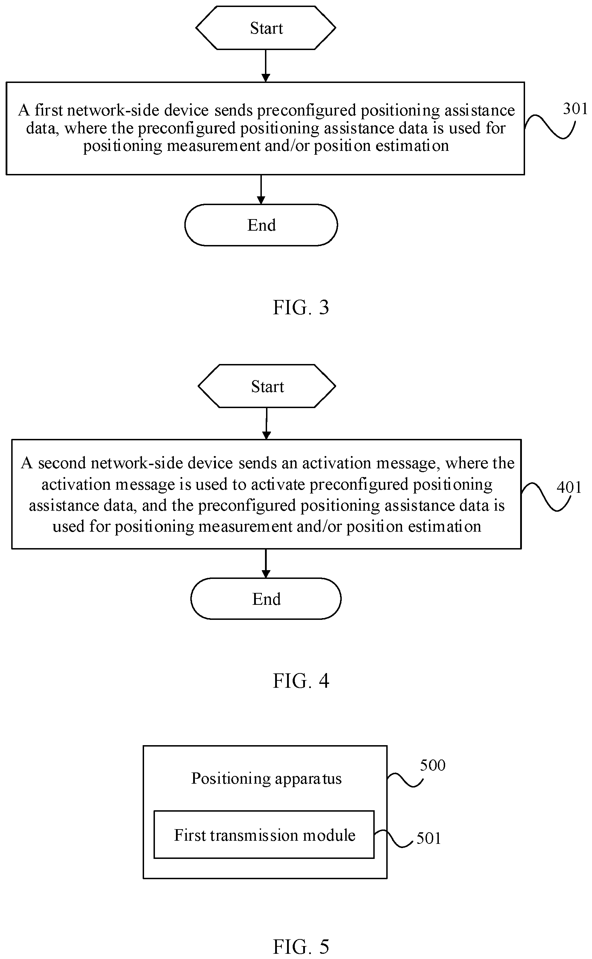

As shown in FIG. 3, an embodiment of this application further provides a positioning method including:
Step 301: A first network-side device sends preconfigured positioning assistance data, where the preconfigured positioning assistance data is used for positioning measurement and/or position estimation.

The first network-side device may be specifically a location server (Location Management Function, LMF).

The positioning measurement includes but is not limited to measurement on a PRS, a synchronization signal/physical broadcast channel signal block (Synchronization Signal and PBCH block, SSB), and CSI reference signal (CSI Reference Signal, CSI-RS).

Optionally, if an initial state of the preconfigured positioning assistance data is an activated state, the UE assumes that the preconfigured positioning assistance data becomes valid immediately, that is, becoming valid immediately after the UE obtains through decoding signaling (such as RRC) corresponding to the preconfigured positioning assistance data. If the initial state of the preconfigured positioning assistance data is a deactivated state, the UE assumes that the preconfigured positioning assistance data does not become valid immediately, and the UE may determine that the preconfigured positioning assistance data becomes valid in a case that an activation message is received or preset event information is satisfied.

In this embodiment of this application, the preconfigured positioning assistance data is sent to the terminal, and when it is determined that the terminal needs to perform positioning measurement and/or position estimation, the terminal can directly perform positioning measurement and/or position estimation based on the preconfigured positioning assistance data, with no need to interact with a network-side device for positioning assistance data, thereby reducing a corresponding delay.

Optionally, the preconfigured positioning assistance data includes at least one group of preconfigured positioning assistance data, and each group of preconfigured positioning assistance data includes at least one of the following:
an identifier of the preconfigured positioning assistance data, where the identifier of the preconfigured positioning assistance data is used for indicating a type of positioning assistance data;
a configuration identifier for the preconfigured positioning assistance data;
a state of the preconfigured positioning assistance data;
information indicating an activation mode for the preconfigured positioning assistance data;
information indicating a deactivation mode for the preconfigured positioning assistance data;
content of the preconfigured positioning assistance data;
a valid time of the preconfigured positioning assistance data;
a valid area associated with the preconfigured positioning assistance data;
a bandwidth part BWP identifier associated with the preconfigured positioning assistance data;
a component carrier identifier associated with the preconfigured positioning assistance data;
a frequency point associated with the preconfigured positioning assistance data; and
a first long term evolution positioning protocol LPP transaction identifier, where the first LPP transaction identifier is a transaction identifier of a first LPP message carrying the preconfigured positioning assistance data.

Optionally, the valid area includes at least one of the following:
an area corresponding to a cell list, where the cell list includes at least one cell;
a specific area;
an area in which a measurement change value of a specific reference signal does not exceed a threshold;
an area in which a distance from a target position does not exceed a preset distance; and
an area corresponding to a current serving cell of a terminal or a camp-on cell of the terminal.

Optionally, a transaction end flag in the first LPP message indicates transaction being not ended.

It should be noted that the preconfigured positioning assistance data has been described in detail in the method embodiment of the terminal side, and therefore is not repeated here.

Optionally, after the first network-side device sends the preconfigured positioning assistance data, the method further includes:
in a case that a state of the preconfigured positioning assistance data needs to be changed from deactivated to activated, sending, by the first network-side device, an activation message or sending a second activation request to a second network-side device.

The activation message is used to activate the preconfigured positioning assistance data, and the second activation request is used to request the second network-side device to send an activation message. The second network-side device is specifically a base station or a serving base station.

For example, in a case that the initial state of the preconfigured positioning assistance data is deactivated, an activation message or a second activation request is sent. Optionally, the second activation request includes at least one of the following:
an activation request identifier, used to request the second network-side device to activate the preconfigured positioning assistance data;
a type of an activation message, for example, being sent by MAC CE, DCI, or RRC, where optionally, in a case of a default or protocol-specified type of activation message, the information can be omitted;
a time for performing positioning measurement and/or position estimation by the terminal, that is, a time when the UE performs positioning measurement and/or position estimation (or the UE expects to obtain its own location within a time/time window), such as schedule location time;
an activation time of the preconfigured positioning assistance data, where the activation time at least includes at least one of an initial activation time, an activation end time, an activation duration, an activation time period, the number of activation periods, and an interval of activation periods (an interval between adjacent periods) of the preconfigured positioning assistance data;
an activation time requirement for the preconfigured positioning assistance data, that is, the second network-side device is required to activate the preconfigured positioning assistance data within a T2 time after receiving the activation request; and
information related to first LPP transaction, where the information related to first LPP transaction has been described in detail in the method embodiment of the terminal side, and therefore is not repeated here. The information related to first LPP transaction needs to be further carried by the second network-side device in the activation message for the preconfigured assistance data.

Optionally, the second activation request may be sent by using an NR positioning protocol a (NRPPa) message.

Optionally, the activation message may be sent by the first network-side device to the terminal using an LPP message such as a newly defined LPP message, and may be used to activate the preconfigured assistance data; or the activation message is carried in an LPP message with the positioning measurement request.

Optionally, the sending an activation message to the first network-side device includes:
sending, by the first network-side device, an activation message based on second event information; where

Optionally, the second event information includes at least one of the following:
the preconfigured positioning assistance data being within a valid time; and
the terminal being located in a valid area.

Optionally, the information related to first LPP transaction includes at least one of the following:
a second LPP transaction identifier, where the second LPP transaction identifier is the same as a first LPP transaction identifier, the first LPP transaction identifier is a transaction identifier of a first LPP message, and the first LPP message is an LPP message carrying the preconfigured positioning assistance data;
a second transaction sequence identifier, where the second transaction sequence identifier is different from a first transaction sequence identifier, and the first transaction sequence identifier is a transaction sequence identifier of the first LPP message; and
a first transaction end flag.

Optionally, after the first network-side device sends the preconfigured positioning assistance data, the method further includes:
sending first indication information, where the first indication information is used for deactivating, releasing, or modifying the preconfigured positioning assistance data.

Optionally, the first indication information includes at least one of the following:
a deactivate identifier, a release identifier, or a modify identifier;
a second configuration identifier, where the second configuration identifier is used to indicate preconfigured positioning assistance data with a specific configuration or specific identifier;
specific configuration information for preconfigured positioning assistance data; and
information related to second LPP transaction.

Optionally, the information related to second LPP transaction includes at least one of the following:
a third LPP transaction identifier, where the third LPP transaction identifier is the same as a first LPP transaction identifier, the first LPP transaction identifier is a transaction identifier of a first LPP message, and the first LPP message is an LPP message carrying the preconfigured positioning assistance data;
a third transaction sequence identifier, where the third transaction sequence identifier is different from a first transaction sequence identifier, and the first transaction sequence identifier is a transaction sequence identifier of the first LPP message; and
a second transaction end flag.

Optionally, the preconfigured positioning assistance data includes at least one of the following:
static positioning assistance data;
semi-static positioning assistance data; and
dynamic positioning assistance data.

Optionally, a state of the static positioning assistance data is always an activated state.

In this embodiment of this application, the preconfigured positioning assistance data is sent to the terminal, and when it is determined that the terminal needs to perform positioning measurement and/or position estimation, the terminal can directly perform positioning measurement and/or position estimation based on the preconfigured positioning assistance data, with no need to interact with a network-side device for positioning assistance data, thereby reducing a corresponding delay.

As shown in FIG. 4, an embodiment of this application further provides a positioning method, including the following steps.

Step 401: A second network-side device sends an activation message, where the activation message is used to activate preconfigured positioning assistance data, and the preconfigured positioning assistance data is used for positioning measurement and/or position estimation.

In this embodiment of this application, the second network-side device sends the activation message to activate the preconfigured positioning assistance data, so that when the UE needs to perform positioning measurement and/or position estimation, positioning measurement and/or position estimation can be directly performed based on the preconfigured positioning assistance data, with no need to interact with a network-side device for positioning assistance data, thereby reducing a corresponding delay.

Optionally, before the second network-side device sends the activation message, the method further includes:
receiving a second activation request sent by a first network-side device or a first activation request sent by a terminal, where the second activation request or the first activation request is used to request the second network-side device to send an activation message.

Optionally, the first activation request includes at least one of the following:
an activation request identifier, where the identifier is used to request the second network-side device to activate the preconfigured positioning assistance data;
a type of an activation message, for example, being sent by MAC CE, DCI, RRC or LPP; where optionally, in a case of a default or protocol-specified type of activation message, the information can be omitted.
a terminal-expected time for positioning measurement and/or position estimation, that is, a time when the UE expects to perform positioning measurement and/or position estimation (or the UE expects to obtain its own location within a time/time window), such as schedule location time;
an activation time of the preconfigured positioning assistance data, where the activation time at least includes at least one of an initial activation time, an activation end time, an activation duration, an activation time period, the number of activation periods, and an interval of activation periods (an interval between adjacent periods) of the preconfigured positioning assistance data; and
an activation time requirement for the preconfigured positioning assistance data, that is, the second network-side device is required to activate the preconfigured positioning assistance data within a T2 time after receiving the activation request.

Optionally, the second activation request includes at least one of the following:
an activation request identifier;
a type of an activation message;
a time for performing positioning measurement and/or position estimation by a terminal;
an activation time of the preconfigured positioning assistance data;
an activation time requirement for the preconfigured positioning assistance data; and
information related to first LPP transaction.

Optionally, the information related to first LPP transaction includes at least one of the following:
a second LPP transaction identifier, where the second LPP transaction identifier is the same as a first LPP transaction identifier, the first LPP transaction identifier is a transaction identifier of a first LPP message, and the first LPP message is an LPP message carrying the preconfigured positioning assistance data;
a second transaction sequence identifier, where the second transaction sequence identifier is different from a first transaction sequence identifier, and the first transaction sequence identifier is a transaction sequence identifier of the first LPP message; and
a first transaction end flag.

The content of this second activation request has already been described in the method embodiment of the first network-side device, and therefore is not repeated here.

Optionally, the second network-side device sends an activation message to the terminal, which may be sent by using at least one message of RRC, MAC CE, and DCI signaling.

The activation message includes at least one of the following:
an activation identifier, where the activation identifier is used to activate the preconfigured positioning assistance data, for example, the activation message is sent via DCI signaling, and a field in the DCI is "activate preconfigured positioning assistance data";
a configuration identifier of the preconfigured positioning assistance data, where the configuration identifier is used to indicate preconfigured positioning assistance data of a specific configuration or a specific identifier, and there may be one or more configuration identifiers; and
information related to first LPP transaction.

Optionally, the information related to first LPP transaction includes at least one of the following:
a second LPP transaction identifier, where the second LPP transaction identifier is the same as the first LPP transaction identifier, the first LPP transaction identifier is a transaction identifier of a first LPP message, the first LPP message is an LPP message carrying the preconfigured positioning assistance data, and the second LPP transaction identifier being the same as the first LPP transaction identifier indicates that the activation message and the preconfigured positioning assistance data belong to a same LPP transaction;
a second transaction sequence identifier (Transaction sequence ID), where the second transaction sequence identifier is different from a first transaction sequence identifier, and the first transaction sequence identifier is a transaction sequence identifier of the first LPP message; and
a first transaction end flag, where the first transaction end flag indicates whether the transaction is ended or not ended.

Optionally, the second network-side device sends first indication information to a terminal, where the first indication information is used for deactivating, releasing, or modifying the preconfigured positioning assistance data. The first indication information may be sent by using at least one of RRC, MAC CE, and DCI signaling.

The first indication information includes at least one of the following:
a deactivate identifier, a release identifier, or a modify identifier;
a second configuration identifier, where the second configuration identifier is used to indicate preconfigured positioning assistance data with a specific configuration or specific identifier, and there may be one or more second configuration identifiers;
specific configuration information for preconfigured positioning assistance data, that is, preconfigured positioning assistance data of a specific configuration is deactivated, released, or modified by using the first indication information; and
information related to second LPP transaction.

Optionally, the information related to second LPP transaction includes at least one of the following:
a third LPP transaction identifier, where the third LPP transaction identifier is the same as the first LPP transaction identifier or the second LPP transaction identifier, the first LPP transaction identifier is a transaction identifier of a first LPP message, the first LPP message is an LPP message carrying the preconfigured positioning assistance data, and the second LPP transaction identifier is a transaction identifier in the activation message. The third LPP transaction identifier is the same as the first LPP transaction identifier or the second LPP transaction identifier, indicating that the first indication information belongs to a same LPP transaction as the preconfigured positioning assistance data or the activation message;
a third transaction sequence identifier, where the third transaction sequence identifier is different from the first transaction sequence identifier or the second transaction sequence identifier. The first transaction sequence identifier is a transaction sequence identifier of the first LPP message and the second transaction sequence identifier is a transaction sequence identifier in the activation message. The third transaction sequence identifier being different from the first transaction sequence identifier or the second transaction sequence identifier indicates that the first indication information is different from the preconfigured positioning assistance data or the activation message; and
a second transaction end flag, indicating whether the transaction is ended or not ended.

Optionally, the default activation message indicates that the Transaction is not ended, and the deactivation message indicates that the transaction is ended.

Optionally, end of the transaction is indicated by default, that is, the UE receives the deactivation message, the preconfigured positioning assistance data no more takes effect, and then the LPP transaction is ended.

Optionally, before the sending the first indication information to the terminal, the method further includes:
receiving first request information sent by a first network-side device, where the first request information is used to request the second network-side device to send the first indication information.

The first request information includes at least one of the following:
a deactivation, modification, or release request identifier, indicating that the signaling is used to request the second network-side device to send a deactivation, modification, or release request;
a type of a deactivation, modification, or release message, for example, being sent by using MAC CE, DCI, or RRC; where optionally, in a case of a default or protocol-specified message type, the information can be omitted;
a configuration identifier for the preconfigured positioning assistance data, where the identifier is used for indicating preconfigured positioning assistance data of a specific configuration or a specific identifier, that is, requesting to deactivate, modify, or release preconfigured assistance data with a specific configuration identifier;
specific configuration information for the preconfigured positioning assistance data, that is, requesting to deactivate, modify, or release preconfigured assistance data with a specific configuration;
a deactivation, modification, or release time for preconfigured positioning assistance data, where the time at least includes: end activation time for the preconfigured positioning assistance data;
a deactivation, modification, or release time requirement for the preconfigured positioning assistance data, that is, the second network-side device is required to deactivate, modify, or release the preconfigured positioning assistance data within a T3 time after receiving the request; and
information related to LPP transaction, where, optionally, the information related to LPP transaction is required to be included in the deactivation, modification, or release message.

In this embodiment of this application, the second network-side device sends the activation message to activate the preconfigured positioning assistance data, so that when the UE needs to perform positioning measurement and/or position estimation, positioning measurement and/or position estimation can be directly performed based on the preconfigured positioning assistance data, with no need to interact with a network-side device for positioning assistance data, thereby reducing a corresponding delay.

It should be noted that, for the positioning method provided by the embodiments of this application, the execution body may be a positioning apparatus, or a control module for executing the positioning method in the positioning apparatus. In the embodiments of this application, the positioning method being performed by the positioning apparatus is used as an example to describe the positioning apparatus provided in the embodiments of this application.

As shown in FIG. 5, an embodiment of this application further provides a positioning apparatus 500, including:
a first transmission module 501, configured to receive preconfigured positioning assistance data; and
a first measurement module 502, configured to perform positioning measurement and/or position estimation based on the preconfigured positioning assistance data.

Optionally, the preconfigured positioning assistance data includes at least one group of preconfigured positioning assistance data, and each group of preconfigured positioning assistance data includes at least one of the following:
an identifier of the preconfigured positioning assistance data, where the identifier of the preconfigured positioning assistance data is used for indicating a type of positioning assistance data;
a configuration identifier for the preconfigured positioning assistance data;
a state of the preconfigured positioning assistance data;
information indicating an activation mode for the preconfigured positioning assistance data;
information indicating a deactivation mode for the preconfigured positioning assistance data;
content of the preconfigured positioning assistance data;
a valid time of the preconfigured positioning assistance data;
a valid area associated with the preconfigured positioning assistance data;
a bandwidth part BWP identifier associated with the preconfigured positioning assistance data;
a component carrier identifier associated with the preconfigured positioning assistance data;
a frequency point associated with the preconfigured positioning assistance data; and
a first long term evolution positioning protocol LPP transaction identifier, where the first LPP transaction identifier is a transaction identifier of a first LPP message carrying the preconfigured positioning assistance data.

Optionally, the valid area includes at least one of the following:
an area corresponding to a cell list, where the cell list includes at least one cell;
a specific area;
an area in which a measurement change value of a specific reference signal does not exceed a threshold;
an area in which a distance from a target position does not exceed a preset distance; and
an area corresponding to a current serving cell of a terminal or a camp-on cell of the terminal.

Optionally, a transaction end flag in the first LPP message indicates transaction being not ended.

Optionally, the apparatus in this embodiment of this application further includes:
a fourth transmission module, configured to send request information for the preconfigured positioning assistance data before the first transmission module receives the preconfigured positioning assistance data, where the request information is used for requesting the preconfigured positioning assistance data.

The request information includes at least one of the following:
a type of positioning assistance data;
a valid-time indication for the preconfigured positioning assistance data;
a valid-area indication for the preconfigured positioning assistance data;
an area in which the terminal is currently located;
a subsequent activation request indication for positioning assistance data;
a subsequent deactivation request indication for positioning assistance data;
a terminal-expected activation time indication for the preconfigured positioning assistance data;
a terminal-expected time for positioning measurement and/or position estimation; and
desired configuration information for positioning assistance data.

Optionally, the type of positioning assistance data includes preconfigured positioning assistance data or ordinary positioning assistance data.

Optionally, in a case that the type of positioning assistance data in the request information is preconfigured positioning assistance data, the request information further includes at least one of the following:
a state of the preconfigured positioning assistance data; and
information indicating an activation mode for the preconfigured positioning assistance data.

Optionally, the state of the preconfigured positioning assistance data includes being activated or being deactivated.

Optionally, the first measurement module is configured to: in a case that a state of the preconfigured positioning assistance data is activated, perform, for the terminal, positioning measurement and/or position estimation based on the preconfigured positioning assistance data.

Optionally, the apparatus in this embodiment of this application further includes:
a fifth transmission module, configured to send a first activation request for the preconfigured positioning assistance data before the first measurement module performs positioning measurement and/or position estimation based on the preconfigured positioning assistance data, where the first activation request is used to activate the preconfigured positioning assistance data.

Optionally, the first activation request includes at least one of the following:
an activation request identifier;
a type of an activation message;
a terminal-expected time for positioning measurement and/or position estimation; and
an activation time of the preconfigured positioning assistance data; and
an activation time requirement for the preconfigured positioning assistance data.

Optionally, the apparatus in this embodiment of this application further includes:
a sixth transmission module, configured to receive an activation message before the first measurement module performs positioning measurement and/or position estimation based on the preconfigured positioning assistance data; and
a first processing module, configured to activate the preconfigured positioning assistance data according to the activation message.

The activation message includes at least one of the following:
an activation identifier;
a first configuration identifier, where the first configuration identifier is used to indicate preconfigured positioning assistance data with a specific configuration or specific identifier; and
information related to first LPP transaction.

Optionally, the information related to first LPP transaction includes at least one of the following:
a second LPP transaction identifier, where the second LPP transaction identifier is the same as a first LPP transaction identifier, the first LPP transaction identifier is a transaction identifier of a first LPP message, and the first LPP message is an LPP message carrying the preconfigured positioning assistance data;
a second transaction sequence identifier, where the second transaction sequence identifier is different from a first transaction sequence identifier, and the first transaction sequence identifier is a transaction sequence identifier of the first LPP message; and
a first transaction end flag.

Optionally, the apparatus in this embodiment of this application further includes:
a seventh transmission module, configured to receive first indication information after the first transmission module receives the preconfigured positioning assistance data, where the first indication information is used for deactivating, releasing, or modifying the preconfigured positioning assistance data.

Optionally, the first indication information includes at least one of the following:
a deactivate identifier, a release identifier, or a modify identifier;
a second configuration identifier, where the second configuration identifier is used to indicate preconfigured positioning assistance data with a specific configuration or specific identifier;
specific configuration information for preconfigured positioning assistance data; and
information related to second LPP transaction.

Optionally, the information related to second LPP transaction includes at least one of the following:
a third LPP transaction identifier, where the third LPP transaction identifier is the same as a first LPP transaction identifier, the first LPP transaction identifier is a transaction identifier of a first LPP message, and the first LPP message is an LPP message carrying the preconfigured positioning assistance data;
a third transaction sequence identifier, where the third transaction sequence identifier is different from a first transaction sequence identifier, and the first transaction sequence identifier is a transaction sequence identifier of the first LPP message; and
a second transaction end flag.

Optionally, the apparatus in this embodiment of this application further includes:
a first determining module, configured to: before the first measurement module performs positioning measurement and/or position estimation based on the preconfigured positioning assistance data, determine, based on first event information, that the state of the preconfigured positioning assistance data is activated.

The first event information includes at least one of the following:
a positioning measurement and/or position estimation request message having been received;
no positioning measurement and/or position estimation end request being received;
the preconfigured positioning assistance data being within a valid time; and
the terminal being located in a valid area.

Optionally, the preconfigured positioning assistance data includes at least one of the following:
static positioning assistance data;
semi-static positioning assistance data; and
dynamic positioning assistance data.

Optionally, a state of the static positioning assistance data is always an activated state.

In this embodiment of this application, the preconfigured positioning assistance data is received, and when it is determined that the UE needs to perform positioning measurement and/or position estimation, positioning measurement and/or position estimation can be directly performed based on the preconfigured positioning assistance data, with no need to interact with a network-side device for positioning assistance data, thereby reducing a corresponding delay.

The positioning apparatus in this embodiment of this application may be an apparatus, or an apparatus or electric device having an operating system, or may be a component, an integrated circuit, or a chip in the terminal. The apparatus or electric device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The apparatus provided in this embodiment of this application is capable of implementing the processes implemented in the method embodiment in FIG. 2, with the same technical effects achieved. To avoid repetition, details are not described herein again.

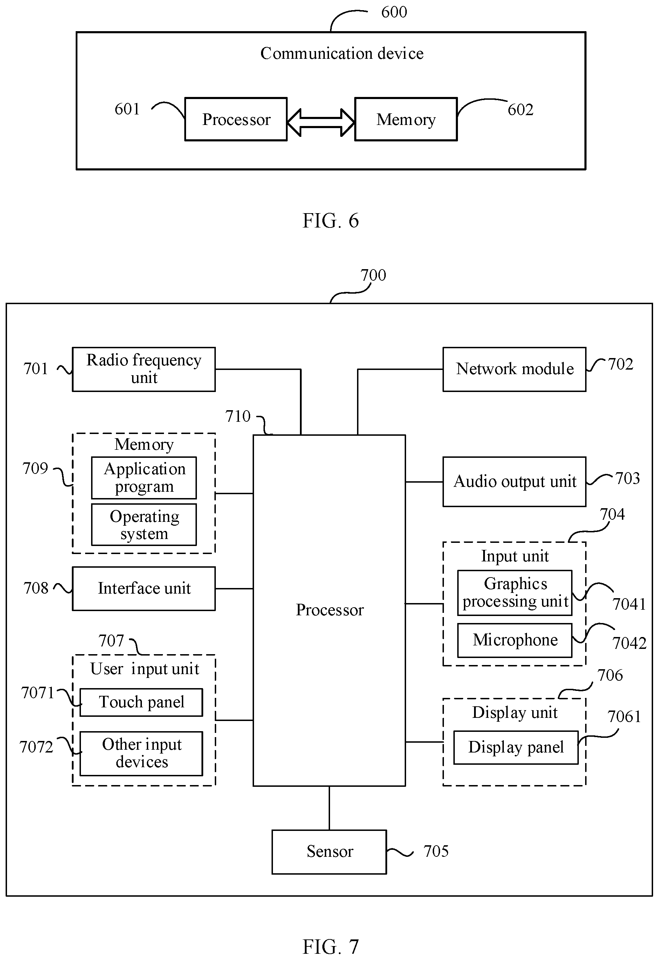

Optionally, as shown in FIG. 6, an embodiment of this application further provides a communication device 600, including a processor 601, a memory 602, and a program or instructions stored in the memory 602 and capable of running on the processor 601. For example, when the communication device 600 is a terminal and when the program or instructions are executed by the processor 601, the processes of the foregoing embodiment of the positioning method applied to the terminal are implemented, with the same technical effects achieved. When the communication device 600 is a network-side device (a first network-side device or a second network-side device), and when the program or instructions are executed by the processor 601, the processes of the foregoing embodiments of the positioning method applied to the first network-side device or the second network-side device are implemented, with the same technical effects achieved. To avoid repetition, details are not repeated herein.

An embodiment of the application further provides a terminal, including a processor and a communication interface, where the communication interface is configured to receive preconfigured positioning assistance data; and the processor is configured to perform positioning measurement and/or position estimation based on the preconfigured positioning assistance data.

The terminal embodiments correspond to the foregoing terminal-side method embodiments, and the implementation processes and implementations of the foregoing method embodiments can be applied to the terminal embodiments, with the same technical effects achieved. Specifically, FIG. 7 is a schematic structural diagram of hardware of a terminal for implementing the embodiments of this application. The terminal 700 includes but is not limited to at least part of components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 may include a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, the radio frequency unit 701 receives downlink data from a network-side device, and then sends the downlink data to the processor 710 for processing; and also sends uplink data to the network-side device. Generally, the radio frequency unit 701 includes but is not limited to an antenna, at least one amplifier, a transceiver, a coupler, a low noise amplifier, a duplexer, and the like.

The memory 709 may be configured to store software programs or instructions and various data. The memory 709 may include a program or instruction storage area and a data storage area. The program or instruction storage area may store an operating system, an application program or instruction required by at least one function (for example, a sound playback function or an image playback function), and the like. In addition, the memory 709 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another volatile solid-state storage device.

The processor 710 may include one or more processing units. Optionally, an application processor and a modem processor may be integrated in the processor 710. The application processor primarily processes an operating system, user interfaces, application programs or instructions, and the like. The modem processor primarily processes radio communication, for example, being a baseband processor. It can be understood that the modem processor may alternatively be not integrated in the processor 710.

The radio frequency unit 701 is configured to receive preconfigured positioning assistance data; and the processor 710 is configured to perform positioning measurement and/or position estimation based on the preconfigured positioning assistance data.

Optionally, the preconfigured positioning assistance data includes at least one group of preconfigured positioning assistance data, and each group of preconfigured positioning assistance data includes at least one of the following:
an identifier of the preconfigured positioning assistance data, where the identifier of the preconfigured positioning assistance data is used for indicating a type of positioning assistance data;
a configuration identifier for the preconfigured positioning assistance data;
a state of the preconfigured positioning assistance data;
information indicating an activation mode for the preconfigured positioning assistance data;
information indicating a deactivation mode for the preconfigured positioning assistance data;
content of the preconfigured positioning assistance data;
a valid time of the preconfigured positioning assistance data;
a valid area associated with the preconfigured positioning assistance data;
a bandwidth part BWP identifier associated with the preconfigured positioning assistance data;
a component carrier identifier associated with the preconfigured positioning assistance data;
a frequency point associated with the preconfigured positioning assistance data; and
a first long term evolution positioning protocol LPP transaction identifier, where the first LPP transaction identifier is a transaction identifier of a first LPP message carrying the preconfigured positioning assistance data.

Optionally, the valid area includes at least one of the following:
an area corresponding to a cell list, where the cell list includes at least one cell;
a specific area;
an area in which a measurement change value of a specific reference signal does not exceed a threshold;
an area in which a distance from a target position does not exceed a preset distance; and
an area corresponding to a current serving cell of a terminal or a camp-on cell of the terminal.

Optionally, a transaction end flag in the first LPP message indicates transaction being not ended.

Optionally, before receiving the preconfigured positioning assistance data, the radio frequency unit 701 is further configured to:
send request information for the preconfigured positioning assistance data, where the request information is used for requesting the preconfigured positioning assistance data

The request information includes at least one of the following:
a type of positioning assistance data;
a valid-time indication for the preconfigured positioning assistance data;
a valid-area indication for the preconfigured positioning assistance data;
an area in which the terminal is currently located;
a subsequent activation request indication for positioning assistance data;
a subsequent deactivation request indication for positioning assistance data;
a terminal-expected activation time indication for the preconfigured positioning assistance data;
a terminal-expected time for positioning measurement and/or position estimation; and
desired configuration information for positioning assistance data.

Optionally, the type of positioning assistance data includes preconfigured positioning assistance data or ordinary positioning assistance data.

Optionally, in a case that the type of positioning assistance data in the request information is preconfigured positioning assistance data, the request information further includes at least one of the following:
a state of the preconfigured positioning assistance data; and
information indicating an activation mode for the preconfigured positioning assistance data.

Optionally, the state of the preconfigured positioning assistance data includes being activated or being deactivated.

Optionally, the processor 710 is configured to: in a case that a state of the preconfigured positioning assistance data is activated, perform, for the terminal, positioning measurement and/or position estimation based on the preconfigured positioning assistance data.

Optionally, before the processor 710 performs positioning measurement and/or position estimation based on the preconfigured positioning assistance data, the radio frequency unit 701 is further configured to:
send a first activation request for the preconfigured positioning assistance data, where the first activation request is used to activate the preconfigured positioning assistance data.

Optionally, the first activation request includes at least one of the following:
an activation request identifier;
a type of an activation message;
a terminal-expected time for positioning measurement and/or position estimation; and
an activation time of the preconfigured positioning assistance data; and
an activation time requirement for the preconfigured positioning assistance data.

Optionally, before the processor 710 performs positioning measurement and/or position estimation based on the preconfigured positioning assistance data, the radio frequency unit 701 is further configured to:
receive an activation message; and
activate the preconfigured positioning assistance data according to the activation message.

The activation message includes at least one of the following:
an activation identifier;
a first configuration identifier, where the first configuration identifier is used to indicate preconfigured positioning assistance data with a specific configuration or specific identifier; and
information related to first LPP transaction.

Optionally, the information related to first LPP transaction includes at least one of the following:
a second LPP transaction identifier, where the second LPP transaction identifier is the same as a first LPP transaction identifier, the first LPP transaction identifier is a transaction identifier of a first LPP message, and the first LPP message is an LPP message carrying the preconfigured positioning assistance data;
a second transaction sequence identifier, where the second transaction sequence identifier is different from a first transaction sequence identifier, and the first transaction sequence identifier is a transaction sequence identifier of the first LPP message; and
a first transaction end flag.

Optionally, after the processor receives the preconfigured positioning assistance data, the radio frequency unit 701 is further configured to:
receive first indication information, where the first indication information is used for deactivating, releasing, or modifying the preconfigured positioning assistance data.

Optionally, the first indication information includes at least one of the following:
a deactivate identifier, a release identifier, or a modify identifier;
a second configuration identifier, where the second configuration identifier is used to indicate preconfigured positioning assistance data with a specific configuration or specific identifier;
specific configuration information for preconfigured positioning assistance data; and
information related to second LPP transaction.

Optionally, the information related to second LPP transaction includes at least one of the following:
a third LPP transaction identifier, where the third LPP transaction identifier is the same as a first LPP transaction identifier, the first LPP transaction identifier is a transaction identifier of a first LPP message, and the first LPP message is an LPP message carrying the preconfigured positioning assistance data;
a third transaction sequence identifier, where the third transaction sequence identifier is different from a first transaction sequence identifier, and the first transaction sequence identifier is a transaction sequence identifier of the first LPP message; and
a second transaction end flag.

Optionally, before performing positioning measurement and/or position estimation based on the preconfigured positioning assistance data, the processor 710 is further configured to: determine, based on first event information, that the state of the preconfigured positioning assistance data is activated.

The first event information includes at least one of the following:
a positioning measurement and/or position estimation request message having been received;
no positioning measurement and/or position estimation end request being received;
the preconfigured positioning assistance data being within a valid time; and
the terminal being located in a valid area.

Optionally, the preconfigured positioning assistance data includes at least one of the following:
static positioning assistance data;
semi-static positioning assistance data; and
dynamic positioning assistance data.

Optionally, a state of the static positioning assistance data is always an activated state.

In this embodiment of this application, the terminal receives the preconfigured positioning assistance data, and when it is determined that the UE needs to perform positioning measurement and/or position estimation, positioning measurement and/or position estimation can be directly performed based on the preconfigured positioning assistance data, with no need to interact with a network-side device for positioning assistance data, thereby reducing a corresponding delay.

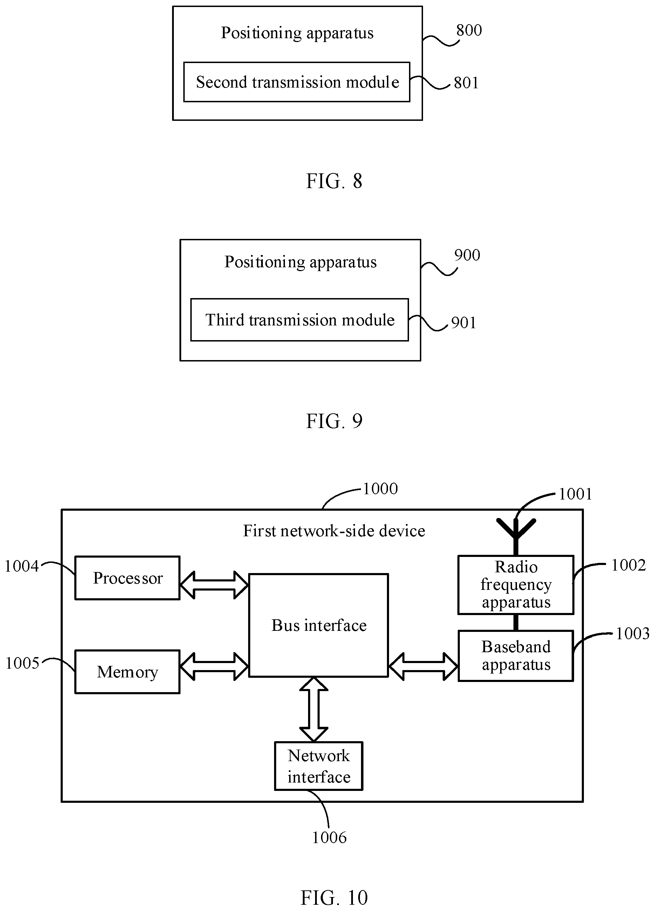

As shown in FIG. 8, an embodiment of this application provides a positioning apparatus 800, including:
a second transmission module 801, configured to send preconfigured positioning assistance data, where the preconfigured positioning assistance data is used for positioning measurement and/or position estimation.

Optionally, the apparatus in this embodiment of this application further includes:
a second determining module, configured to determine preconfigured positioning assistance data.

Optionally, the preconfigured positioning assistance data includes at least one group of preconfigured positioning assistance data, and each group of preconfigured positioning assistance data includes at least one of the following:
an identifier of the preconfigured positioning assistance data, where the identifier of the preconfigured positioning assistance data is used for indicating a type of positioning assistance data;
a configuration identifier for the preconfigured positioning assistance data;
a state of the preconfigured positioning assistance data;
information indicating an activation mode for the preconfigured positioning assistance data;
information indicating a deactivation mode for the preconfigured positioning assistance data;
content of the preconfigured positioning assistance data;
a valid time of the preconfigured positioning assistance data;
a valid area associated with the preconfigured positioning assistance data;
a bandwidth part BWP identifier associated with the preconfigured positioning assistance data;
a component carrier identifier associated with the preconfigured positioning assistance data;
a frequency point associated with the preconfigured positioning assistance data; and
a first long term evolution positioning protocol LPP transaction identifier, where the first LPP transaction identifier is a transaction identifier of a first LPP message carrying the preconfigured positioning assistance data.

Optionally, the valid area includes at least one of the following:
an area corresponding to a cell list, where the cell list includes at least one cell;
a specific area;
an area in which a measurement change value of a specific reference signal does not exceed a threshold;
an area in which a distance from a target position does not exceed a preset distance; and
an area corresponding to a current serving cell of a terminal or a camp-on cell of the terminal.

Optionally, a transaction end flag in the first LPP message indicates transaction being not ended.

Optionally, the apparatus in this embodiment of this application further includes:
an eighth transmission module, configured to: after the second transmission module sends the preconfigured positioning assistance data, send an activation message or send a second activation request to a second network-side device in a case that a state of the preconfigured positioning assistance data needs to be changed from deactivated to activated.

The activation message is used to activate the preconfigured positioning assistance data, and the second activation request is used to request the second network-side device to send an activation message.

Optionally, the eighth transmission module is configured to send an activation message based on second event information.

The second event information includes at least one of the following:
the preconfigured positioning assistance data being within a valid time; and
the terminal being located in a valid area.

Optionally, the second activation request includes at least one of the following:
an activation request identifier;
a type of an activation message;
a time for performing positioning measurement and/or position estimation by a terminal;
an activation time of the preconfigured positioning assistance data;
an activation time requirement for the preconfigured positioning assistance data; and
information related to first LPP transaction.

Optionally, the information related to first LPP transaction includes at least one of the following:
a second LPP transaction identifier, where the second LPP transaction identifier is the same as a first LPP transaction identifier, the first LPP transaction identifier is a transaction identifier of a first LPP message, and the first LPP message is an LPP message carrying the preconfigured positioning assistance data;
a second transaction sequence identifier, where the second transaction sequence identifier is different from a first transaction sequence identifier, and the first transaction sequence identifier is a transaction sequence identifier of the first LPP message; and
a first transaction end flag.

Optionally, the apparatus in this embodiment of this application further includes:
a ninth transmission module, configured to send first indication information after the second transmission module sends the preconfigured positioning assistance data, where the first indication information is used for deactivating, releasing, or modifying the preconfigured positioning assistance data.

Optionally, the first indication information includes at least one of the following:
a deactivate identifier, a release identifier, or a modify identifier;
a second configuration identifier, where the second configuration identifier is used to indicate preconfigured positioning assistance data with a specific configuration or specific identifier;
specific configuration information for preconfigured positioning assistance data; and
information related to second LPP transaction.

Optionally, the information related to second LPP transaction includes at least one of the following:
a third LPP transaction identifier, where the third LPP transaction identifier is the same as a first LPP transaction identifier, the first LPP transaction identifier is a transaction identifier of a first LPP message, and the first LPP message is an LPP message carrying the preconfigured positioning assistance data;
a third transaction sequence identifier, where the third transaction sequence identifier is different from a first transaction sequence identifier, and the first transaction sequence identifier is a transaction sequence identifier of the first LPP message; and
a second transaction end flag.

Optionally, the preconfigured positioning assistance data includes at least one of the following:
static positioning assistance data;
semi-static positioning assistance data; and
dynamic positioning assistance data.

Optionally, a state of the static positioning assistance data is always an activated state.

In this embodiment of this application, the preconfigured positioning assistance data is sent to the terminal, and when it is determined that the terminal needs to perform positioning measurement and/or position estimation, the terminal can directly perform positioning measurement and/or position estimation based on the preconfigured positioning assistance data, with no need to interact with a network-side device for positioning assistance data, thereby reducing a corresponding delay.

As shown in FIG. 9, an embodiment of this application further provides a positioning apparatus 900, including:
a third transmission module 901, configured to send an activation message, where the activation message is used to activate preconfigured positioning assistance data, and the preconfigured positioning assistance data is used for positioning measurement and/or position estimation.

Optionally, the apparatus in this embodiment of this application further includes:
a tenth transmission module, configured to: before the third transmission module sends the activation message, receive a first activation request sent by a terminal or a second activation request sent by a first network-side device, where the first activation request or the second activation request is used to request activation of preconfigured positioning assistance data.

Optionally, the activation message includes at least one of the following:
an activation identifier;
a first configuration identifier, where the first configuration identifier is used to indicate preconfigured positioning assistance data with a specific configuration or specific identifier; and
information related to first LPP transaction.

Optionally, the apparatus in this embodiment of this application further includes:
an eleventh transmission module, configured to send first indication information to a terminal, where the first indication information is used for deactivating, releasing, or modifying the preconfigured positioning assistance data.

Optionally, the apparatus in this embodiment of this application further includes:
a twelfth transmission module, configured to: before the eleventh transmission module sends the first indication information to the terminal, receive first request information sent by a first network-side device, where the first request information is used to request the second network-side device to send the first indication information.

Optionally, the second activation request includes at least one of the following:
an activation request identifier;
a type of an activation message;
a time for performing positioning measurement and/or position estimation by a terminal;
an activation time of the preconfigured positioning assistance data;
an activation time requirement for the preconfigured positioning assistance data; and
information related to first LPP transaction.

Optionally, the information related to first LPP transaction includes at least one of the following:
a second LPP transaction identifier, where the second LPP transaction identifier is the same as a first LPP transaction identifier, the first LPP transaction identifier is a transaction identifier of a first LPP message, and the first LPP message is an LPP message carrying the preconfigured positioning assistance data;
a second transaction sequence identifier, where the second transaction sequence identifier is different from a first transaction sequence identifier, and the first transaction sequence identifier is a transaction sequence identifier of the first LPP message; and
a first transaction end flag.

In this embodiment of this application, the activation message is sent to activate the preconfigured positioning assistance data, so that when the UE needs to perform positioning measurement and/or position estimation, positioning measurement and/or position estimation can be directly performed based on the preconfigured positioning assistance data, with no need to interact with a network-side device for positioning assistance data, thereby reducing a corresponding delay.

An embodiment of the application further provides a network-side device, where the network-side device may be the first network-side device or the second network-side device. The network-side device includes a processor and a communication interface. When the network-side device is the first network-side device, the communication interface is used to send preconfigured positioning assistance data, where the preconfigured positioning assistance data is used for positioning measurement and/or position estimation. When the network-side device is a second network-side device, the communication interface is used to send an activation message, where the activation message is used to activate preconfigured positioning assistance data, and the preconfigured positioning assistance data is used for positioning measurement and/or position estimation. The network-side device embodiments correspond to the foregoing network-side device-side method embodiments, and the implementation processes and implementations of the foregoing method embodiments can be applied to the network-side device embodiments, with the same technical effects achieved.

Specifically, an embodiment of this application further provides a network-side device. Optionally, the network-side device is the first network-side device, and as shown in FIG. 10, the network-side device 1000 includes an antenna 1001, a radio frequency apparatus 1002, and a baseband apparatus 1003. The antenna 1001 is connected to the radio frequency apparatus 1002. In an uplink direction, the radio frequency apparatus 1002 receives information by using the antenna 1001, and sends the received information to the baseband apparatus 1003 for processing. In a downlink direction, the baseband apparatus 1003 processes to-be-sent information, and sends the information to the radio frequency apparatus 1002; and the radio frequency apparatus 1002 processes the received information and then sends the information out by using the antenna 1001.

The frequency band processing apparatus may be located in the baseband apparatus 1003. The method performed by the network-side device in the foregoing embodiments may be implemented in the baseband apparatus 1003, and the baseband apparatus 1003 includes a processor 1004 and a memory 1005.

The baseband apparatus 1003 may include, for example, at least one baseband processing unit, where a plurality of chips are disposed on the baseband processing unit. As shown in FIG. 10, one of the chips is, for example, the processor 1004, connected to the memory 1005, to invoke a program in the memory 1005 to perform the operations of the first network-side device shown in the foregoing method embodiment.

The baseband apparatus 1003 may further include a network interface 1006, configured to exchange information with the radio frequency apparatus 1002, where the interface is, for example, a common public radio interface (common public radio interface, CPRI for short).

Specifically, the network-side device (the first network-side device) in this embodiment of the present invention further includes: instructions or a program stored in the memory 1005 and capable of running on the processor 1004. The processor 1004 invokes the instructions or program in the memory 1005 to execute the method executed by the modules shown in FIG. 8, with the same technical effects achieved. To avoid repetition, details are not repeated herein.

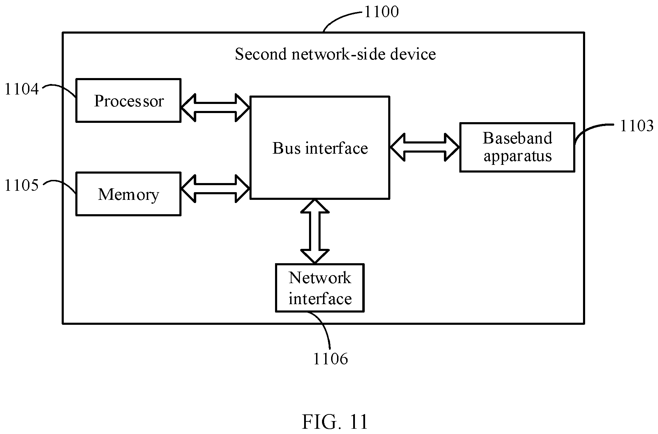

An embodiment of the application further provides a network-side device, where the network-side device may be specifically the foregoing second network-side device. As shown in FIG. 11, the network-side device includes a baseband apparatus 1103. The baseband apparatus 1103 processes the information to be transmitted.

The frequency band processing apparatus may be located in the baseband apparatus 1103. The method performed by the network-side device in the foregoing embodiments may be implemented in the baseband apparatus 1103, and the baseband apparatus 1103 includes a processor 1104 and a memory 1105.

The baseband apparatus 1103 may include, for example, at least one baseband processing unit, where a plurality of chips are disposed on the baseband processing unit. As shown in FIG. 11, one of the chips is, for example, the processor 1104, connected to the memory 1105, to invoke a program in the memory 1105 to perform the operations of the second network-side device shown in the foregoing method embodiment.

The baseband apparatus 1103 may further include a network interface 1106, configured to exchange information with the radio frequency apparatus 1102, where the interface is, for example, a common public radio interface (common public radio interface, CPRI for short).

Specifically, the network-side device (the second network-side device) in this embodiment of the present invention further includes: instructions or a program stored in the memory 1105 and capable of running on the processor 1104. The processor 1104 invokes the instructions or program in the memory 1105 to execute the method executed by the modules shown in FIG. 9, with the same technical effects achieved. To avoid repetition, details are not repeated herein.

An embodiment of this application further provides a readable storage medium, where a program or instructions are stored in the readable storage medium. When the program or instructions are executed by a processor, the processes of the foregoing embodiment of the positioning method described above can be implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or instructions to implement the processes of the foregoing positioning method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a non-transitory storage medium, and when being executed by at least one processor, the computer program/program product is configured to implement the processes of the foregoing positioning method embodiments, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network-side device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A positioning method, comprising:
receiving, by a terminal, preconfigured positioning assistance data; and
performing, by the terminal, positioning measurement and/or position estimation based on the preconfigured positioning assistance data.

2. The method according to claim 1, wherein the preconfigured positioning assistance data comprises at least one group of preconfigured positioning assistance data, and each group of preconfigured positioning assistance data comprises at least one of the following:
an identifier of the preconfigured positioning assistance data, wherein the identifier of the preconfigured positioning assistance data is used for indicating a type of positioning assistance data;
a configuration identifier for the preconfigured positioning assistance data;
a state of the preconfigured positioning assistance data;
information indicating an activation mode for the preconfigured positioning assistance data;
information indicating a deactivation mode for the preconfigured positioning assistance data;
content of the preconfigured positioning assistance data;
a valid time of the preconfigured positioning assistance data;
a valid area associated with the preconfigured positioning assistance data;
a bandwidth part BWP identifier associated with the preconfigured positioning assistance data;
a component carrier identifier associated with the preconfigured positioning assistance data;
a frequency point associated with the preconfigured positioning assistance data; and
a first long term evolution positioning protocol LPP transaction identifier, wherein the first LPP transaction identifier is a transaction identifier of a first LPP message carrying the preconfigured positioning assistance data.

3. The method according to claim 2, wherein the valid area comprises at least one of the following:
an area corresponding to a cell list, wherein the cell list comprises at least one cell;
a specific area;
an area in which a measurement change value of a specific reference signal does not exceed a threshold;
an area in which a distance from a target position does not exceed a preset distance; and
an area corresponding to a current serving cell of a terminal or a camp-on cell of the terminal.

4. The method according to claim 2, wherein a transaction end flag in the first LPP message indicates transaction being not ended.

5. The method according to claim 1, before the receiving, by a terminal, preconfigured positioning assistance data, further comprising:
sending, by the terminal, request information for the preconfigured positioning assistance data, wherein the request information is used for requesting the preconfigured positioning assistance data; and
the request information comprises at least one of the following:
a type of positioning assistance data;
a valid-time indication for the preconfigured positioning assistance data;
a valid-area indication for the preconfigured positioning assistance data;
an area in which the terminal is currently located;
a subsequent activation request indication for positioning assistance data;
a subsequent deactivation request indication for positioning assistance data;
a terminal-expected activation time indication for the preconfigured positioning assistance data;
a terminal-expected time for positioning measurement and/or position estimation; and
desired configuration information for positioning assistance data.

6. The method according to claim 2 or 5, wherein the type of positioning assistance data comprises preconfigured positioning assistance data or ordinary positioning assistance data.

7. The method according to claim 5, wherein in a case that the type of positioning assistance data in the request information is preconfigured positioning assistance data, the request information further comprises at least one of the following:
a state of the preconfigured positioning assistance data; and
information indicating an activation mode for the preconfigured positioning assistance data.

8. The method according to claim 2 or 7, wherein the state of the preconfigured positioning assistance data comprises being activated or being deactivated.

9. The method according to claim 1, wherein the performing, by the terminal, positioning measurement and/or position estimation based on the preconfigured positioning assistance data comprises:
in a case that a state of the preconfigured positioning assistance data is activated, performing, by the terminal, positioning measurement and/or position estimation based on the preconfigured positioning assistance data.

10. The method according to claim 1 or 9, before the performing, by the terminal, positioning measurement and/or position estimation based on the preconfigured positioning assistance data, further comprising:
sending, by the terminal, a first activation request for the preconfigured positioning assistance data, wherein the first activation request is used to activate the preconfigured positioning assistance data.

11. The method according to claim 10, wherein the first activation request comprises at least one of the following:
an activation request identifier;
a type of an activation message;
a terminal-expected time for positioning measurement and/or position estimation; and
an activation time of the preconfigured positioning assistance data; and
an activation time requirement for the preconfigured positioning assistance data.

12. The method according to claim 1 or 9, before the performing, by the terminal, positioning measurement and/or position estimation based on the preconfigured positioning assistance data, further comprising:
receiving an activation message; and
activating the preconfigured positioning assistance data according to the activation message; wherein
the activation message comprises at least one of the following:
an activation identifier;
a first configuration identifier, wherein the first configuration identifier is used to indicate preconfigured positioning assistance data with a specific configuration or specific identifier; and
information related to first LPP transaction.

13. The method according to claim 12, wherein the information related to first LPP transaction comprises at least one of the following:
a second LPP transaction identifier, wherein the second LPP transaction identifier is the same as a first LPP transaction identifier, the first LPP transaction identifier is a transaction identifier of a first LPP message, and the first LPP message is an LPP message carrying the preconfigured positioning assistance data;
a second transaction sequence identifier, wherein the second transaction sequence identifier is different from a first transaction sequence identifier, and the first transaction sequence identifier is a transaction sequence identifier of the first LPP message; and
a first transaction end flag.

14. The method according to claim 1 or 12, before the receiving, by a terminal, preconfigured positioning assistance data, further comprising:
receiving first indication information, wherein the first indication information is used for deactivating, releasing, or modifying the preconfigured positioning assistance data.

15. The method according to claim 14, wherein the first indication information comprises at least one of the following:
a deactivate identifier, a release identifier, or a modify identifier;
a second configuration identifier, wherein the second configuration identifier is used to indicate preconfigured positioning assistance data with a specific configuration or specific identifier;
specific configuration information for preconfigured positioning assistance data; and
information related to second LPP transaction.

16. The method according to claim 15, wherein the information related to second LPP transaction comprises at least one of the following:
a third LPP transaction identifier, wherein the third LPP transaction identifier is the same as a first LPP transaction identifier, the first LPP transaction identifier is a transaction identifier of a first LPP message, and the first LPP message is an LPP message carrying the preconfigured positioning assistance data;
a third transaction sequence identifier, wherein the third transaction sequence identifier is different from a first transaction sequence identifier, and the first transaction sequence identifier is a transaction sequence identifier of the first LPP message; and
a second transaction end flag.

17. The method according to claim 1 or 9, before the performing, by the terminal, positioning measurement and/or position estimation based on the preconfigured positioning assistance data, further comprising:
determining, based on first event information, that the state of the preconfigured positioning assistance data is being activated; wherein
the first event information comprises at least one of the following:
a positioning measurement and/or position estimation request message having been received;
no positioning measurement and/or position estimation end request being received;
the preconfigured positioning assistance data being within a valid time; and
the terminal being located in a valid area.

18. The method according to claim 1, wherein the preconfigured positioning assistance data comprises at least one of the following:
static positioning assistance data;
semi-static positioning assistance data; and
dynamic positioning assistance data.

19. The method according to claim 18, wherein a state of the static positioning assistance data is always an activated state.

20. A positioning method, comprising:
sending, by a first network-side device, preconfigured positioning assistance data, wherein the preconfigured positioning assistance data is used for positioning measurement and/or position estimation.

21. The method according to claim 20, wherein the preconfigured positioning assistance data comprises at least one group of preconfigured positioning assistance data, and each group of preconfigured positioning assistance data comprises at least one of the following:
an identifier of the preconfigured positioning assistance data, wherein the identifier of the preconfigured positioning assistance data is used for indicating a type of positioning assistance data;
a configuration identifier for the preconfigured positioning assistance data;
a state of the preconfigured positioning assistance data;
information indicating an activation mode for the preconfigured positioning assistance data;
information indicating a deactivation mode for the preconfigured positioning assistance data;
content of the preconfigured positioning assistance data;
a valid time of the preconfigured positioning assistance data;
a valid area associated with the preconfigured positioning assistance data;
a bandwidth part BWP identifier associated with the preconfigured positioning assistance data;
a component carrier identifier associated with the preconfigured positioning assistance data;
a frequency point associated with the preconfigured positioning assistance data; and
a first long term evolution positioning protocol LPP transaction identifier, wherein the first LPP transaction identifier is a transaction identifier of a first LPP message carrying the preconfigured positioning assistance data.

22. The method according to claim 21, wherein the valid area comprises at least one of the following:
an area corresponding to a cell list, wherein the cell list comprises at least one cell;
a specific area;
an area in which a measurement change value of a specific reference signal does not exceed a threshold;
an area in which a distance from a target position does not exceed a preset distance; and
an area corresponding to a current serving cell of a terminal or a camp-on cell of the terminal.

23. The method according to claim 21, wherein a transaction end flag in the first LPP message indicates transaction being not ended.

24. The method according to claim 20, after the sending, by a first network-side device, preconfigured positioning assistance data, further comprising:
in a case that a state of the preconfigured positioning assistance data needs to be changed from deactivated to activated, sending, by the first network-side device, an activation message or sending a second activation request to a second network-side device; wherein
the activation message is used to activate the preconfigured positioning assistance data, and the second activation request is used to request the second network-side device to send an activation message.

25. The method according to claim 24, wherein the sending, by the first network-side device, an activation message comprises:
sending, by the first network-side device, an activation message based on second event information; wherein
the second event information comprises at least one of the following:
the preconfigured positioning assistance data being within a valid time; and
a terminal being located in a valid area.

26. The method according to claim 24, wherein the second activation request comprises at least one of the following:
an activation request identifier;
a type of an activation message;
a time for performing positioning measurement and/or position estimation by a terminal;
an activation time of the preconfigured positioning assistance data;
an activation time requirement for the preconfigured positioning assistance data; and
information related to first LPP transaction.

27. The method according to claim 26, wherein the information related to first LPP transaction comprises at least one of the following:
a second LPP transaction identifier, wherein the second LPP transaction identifier is the same as a first LPP transaction identifier, the first LPP transaction identifier is a transaction identifier of a first LPP message, and the first LPP message is an LPP message carrying the preconfigured positioning assistance data;
a second transaction sequence identifier, wherein the second transaction sequence identifier is different from a first transaction sequence identifier, and the first transaction sequence identifier is a transaction sequence identifier of the first LPP message; and
a first transaction end flag.

28. The method according to claim 20, after the sending, by a first network-side device, preconfigured positioning assistance data, further comprising:
sending first indication information, wherein the first indication information is used for deactivating, releasing, or modifying the preconfigured positioning assistance data.

29. The method according to claim 28, wherein the first indication information comprises at least one of the following:
a deactivate identifier, a release identifier, or a modify identifier;
a second configuration identifier, wherein the second configuration identifier is used to indicate preconfigured positioning assistance data with a specific configuration or specific identifier;
specific configuration information for preconfigured positioning assistance data; and
information related to second LPP transaction.

30. The method according to claim 29, wherein the information related to second LPP transaction comprises at least one of the following:
a third LPP transaction identifier, wherein the third LPP transaction identifier is the same as a first LPP transaction identifier, the first LPP transaction identifier is a transaction identifier of a first LPP message, and the first LPP message is an LPP message carrying the preconfigured positioning assistance data;
a third transaction sequence identifier, wherein the third transaction sequence identifier is different from a first transaction sequence identifier, and the first transaction sequence identifier is a transaction sequence identifier of the first LPP message; and
a second transaction end flag.

31. The method according to claim 20, wherein the preconfigured positioning assistance data comprises at least one of the following:
static positioning assistance data;
semi-static positioning assistance data; and
dynamic positioning assistance data.

32. The method according to claim 31, wherein a state of the static positioning assistance data is always an activated state.

33. A positioning method, comprising:
sending, by a second network-side device, an activation message, wherein the activation message is used to activate preconfigured positioning assistance data, and the preconfigured positioning assistance data is used for positioning measurement and/or position estimation.

34. The method according to claim 33, before the sending, by a second network-side device, an activation message, further comprising:
receiving a first activation request sent by a terminal or a second activation request sent by a first network-side device, wherein the first activation request or the second activation request is used to request activation of preconfigured positioning assistance data.

35. The method according to claim 34, wherein the activation message comprises at least one of the following:
an activation identifier;
a first configuration identifier, wherein the first configuration identifier is used to indicate preconfigured positioning assistance data with a specific configuration or specific identifier; and
information related to first LPP transaction.

36. The method according to claim 33, further comprising:
sending first indication information to a terminal, wherein the first indication information is used for deactivating, releasing, or modifying the preconfigured positioning assistance data.

37. The method according to claim 36, before the sending first indication information to a terminal, further comprising:
receiving first request information sent by a first network-side device, wherein the first request information is used to request the second network-side device to send the first indication information.

38. A positioning apparatus, comprising:
a first transmission module, configured to receive preconfigured positioning assistance data; and
a first measurement module, configured to perform positioning measurement and/or position estimation based on the preconfigured positioning assistance data.

39. The apparatus according to claim 38, wherein the preconfigured positioning assistance data comprises at least one group of preconfigured positioning assistance data, and each group of preconfigured positioning assistance data comprises at least one of the following:
an identifier of the preconfigured positioning assistance data, wherein the identifier of the preconfigured positioning assistance data is used for indicating a type of positioning assistance data;
a configuration identifier for the preconfigured positioning assistance data;
a state of the preconfigured positioning assistance data;
information indicating an activation mode for the preconfigured positioning assistance data;
information indicating a deactivation mode for the preconfigured positioning assistance data;
content of the preconfigured positioning assistance data;
a valid time of the preconfigured positioning assistance data;
a valid area associated with the preconfigured positioning assistance data;
a bandwidth part BWP identifier associated with the preconfigured positioning assistance data;
a component carrier identifier associated with the preconfigured positioning assistance data;
a frequency point associated with the preconfigured positioning assistance data; and
a first long term evolution positioning protocol LPP transaction identifier, wherein the first LPP transaction identifier is a transaction identifier of a first LPP message carrying the preconfigured positioning assistance data.

40. A positioning apparatus, comprising:
a second transmission module, configured to send preconfigured positioning assistance data, wherein the preconfigured positioning assistance data is used for positioning measurement and/or position estimation.

41. A positioning apparatus, comprising:
a third transmission module, configured to send an activation message, wherein the activation message is used to activate preconfigured positioning assistance data, and the preconfigured positioning assistance data is used for positioning measurement and/or position estimation.

42. A terminal, comprising a processor, a memory, and a program or instructions stored in the memory and capable of running on the processor, wherein when the program or instructions are executed by the processor, the steps of the positioning method according to any one of claims 1 to 19 are implemented.

43. A network-side device, comprising a processor, a memory, and a program or instructions stored in the memory and capable of running on the processor, wherein when the program or instructions are executed by the processor, the steps of the positioning method according to any one of claims 20 to 32 are implemented, or the steps of the positioning method according to any one of claims 33 to 37 are implemented.

44. A readable storage medium, wherein the readable storage medium stores a program or instructions, and when the program or instructions are executed by a processor, the steps of the positioning method according to any one of claims 1 to 19 are implemented, or the steps of the positioning method according to any one of claims 20 to 32 are implemented, or the steps of the positioning method according to any one of claims 33 to 37 are implemented.
